# EUROPEAN PATENT SPECIFICATION

(11) **EP 4 527 260 B1**
(45) Date of publication and mention of the grant of the patent: **19.08.2026**
(21) Application number: 23816404.0
(22) Date of filing: 02.06.2023
(51) Int. Cl.: A47J 31/36, A47J 31/44, A47J 31/52, A47J 31/54, A47J 31/46

(54) **BEVERAGE APPARATUS USING CAPSULE**
GETRÄNKEVORRICHTUNG MIT KAPSEL
APPAREIL DE BOISSON UTILISANT UNE CAPSULE

(30) Priority: 03.06.2022 KR 20220068441; 03.06.2022 KR 20220068442; 03.06.2022 KR 20220068443; 03.06.2022 KR 20220068444; 03.06.2022 KR 20220068445; 03.06.2022 KR 20220068446; 08.08.2022 KR 20220098809
(43) Date of publication of application: 26.03.2025
(73) Proprietor: LG Electronics Inc., Yeongdeungpo-gu Seoul 07336 (KR)
(72) Inventor: LEE, Jungsuk, Seoul 08592 (KR); LEE, Joon Bum, Seoul 08592 (KR); RYU, Hyunggon, Seoul 08592 (KR); RYU, Grami, Seoul 08592 (KR); WAK, Myoung Hoon, Seoul 08592 (KR); OH, Min Kyu, Seoul 08592 (KR); HWANG, In Su, Seoul 08592 (KR); YEO, Junhee, Seoul 08592 (KR); HWANG, Sung Gul, Seoul 08592 (KR); MIN, You Joo, Seoul 08592 (KR)
(74) Representative: Ter Meer Steinmeister & Partner
(86) International application number: PCT/KR2023/007624
(87) International publication number: WO 2023/234745

(56) References cited:
- WO-A1-03/056987
- WO-A1-2021/122492
- WO-A1-2021/122492
- KR-A- 20170 000 370
- KR-B1- 101 798 179
- KR-B1- 101 798 179
- US-A1- 2015 144 003
- US-A1- 2016 045 061
- US-B2- 9 795 247
- SEATTLE COFFEE GEAR: "Crew Review: Francis Francis Y1.1 Touch iper Espresso Machine", 15 February 2013 (2013-02-15), XP093295605, Retrieved from the Internet <URL:https://www.youtube.com/watch?v=vja44NThk6o> [retrieved on 20250714]
- COFFEE MAKER REVIEWS - AROMACUP.COM: "Review + $50 OFF coupon: Francis Francis for illy Y1.1 Touch iperEspresso Machine", YOUTUBE, 19 November 2014 (2014-11-19), XP093116509, Retrieved from the Internet <URL:https://www.youtube.com/watch?v=38USbQ4cha4> [retrieved on 20240108]

## Description

### Technical Field

The present disclosure relates to a beverage apparatus for extracting a beverage contained in a capsule.

### Background Art

A capsule with a raw material for making a beverage sealed inside is widely used. The capsule stores the raw material for the beverage in a sealed state inside, and a user may make the beverage by passing water through the inside of the capsule by using a mechanical apparatus. A representative example of the beverage apparatus using a capsule is a coffee machine. Recently, in addition to coffee, various beverages and beverage ingredients are provided in the capsule for making and drinking the beverages.

One of apparatuses for extracting a beverage by using a capsule is disclosed in prior art document 1, which is Korean Patent Application Publication No. 10-2015-0017541. In prior art document 1, there is a problem that the entire apparatus is integrated and all components are contained within one housing, so the operation of an extraction part cannot be various, and there is a problem that it is difficult to attract the attention of consumers in terms of design. In addition, since a beverage is extracted by using only one capsule, it is difficult to extract various beverages, and since a part from which the extracted beverage is discharged is fixed, there is a problem that various types of cups cannot be used.

In prior art document 2, which is Korean Patent Application Publication No. 10-2017-0040026, a component for forming a through-hole in a capsule to inject water thereto is relatively complex because it performs a rotational motion, and a user must form the through-hole in the capsule by performing a separate manipulation, and it is inconvenient to insert and remove the capsule.

In prior art document 3, which is Korean Patent Application Publication No. 10-2018-0119263, a plurality of capsules is installed to extract a beverage, but beverages cannot be extracted from the plurality of capsules at the same time. In addition, since parts from which the extracted beverages are discharged are fixed, there is a problem that various types of cups cannot be used. In addition, there is a tray that collects the remaining liquid at the bottom of a container support on which the cups are placed, which creates an unsightly appearance.

In prior art document 4, which is Korean Patent No. 10-0924447, a coffee extractor is disclosed. However, since it focuses only on the function of extracting coffee, a user must wait without any information until the coffee is discharged after mounting the capsule, a distance between a cup and an outlet cannot be adjusted, and a tray that collects the remaining liquid is open in a direction opposite to that of gravity, so there is a problem that the tray is easily contaminated by external foreign substances.

Next, even in prior art document 5, which is Korean Patent No. 10-1260504, an apparatus for extracting a beverage by using a capsule is disclosed, but there are problems such as no distance adjustment between a cup and an outlet or no provision of information to a user, and a remaining liquid tray is exposed in a direction opposite to that of gravity, and thus is easily contaminated by external foreign substances.

In prior art document 6, which is Korean Patent Application Publication No. 10-2018-0000496, a coffee machine using a capsule is disclosed, in which a water tank is mounted on the outside of a main body itself. Although the capacity of the water tank can be increased, there is the problem that the appearance of the coffee machine is relatively unattractive, and there is also the problem that it is difficult to clean the inside of the water tank.

In addition, in the above-mentioned prior documents, there is a problem in that the size of a cup that may be used is relatively limited because a distance between an outlet that discharges an extracted beverage and the cup cannot be adjusted.

In addition, in the prior documents, there is also a problem that the discharging direction of an outlet cannot be adjusted in various ways, preventing the extraction of a beverage in various ways.

Seattle Coffee Gear: "Crew Review: Francis Francis Y1.1 Touch iper Espresso Machine", 15 February 2013 (2013-02-15), XP093295605, Retrieved from the Internet: URL:https://www.youtube.com/watch?v=vja44NThk6o.

US 9 795 247 B2 presents a machine for preparing a beverage comprising: a mixing unit for receiving a capsule containing a pre-portioned flavoring ingredient; a liquid circuit for circulating a liquid from a liquid reservoir into the mixing unit for mixing said flavoring ingredient and said liquid to form the beverage; a beverage outlet for dispensing such beverage upon formation to a beverage dispensing area for supporting a user-cup or a user-mug; and a carrying handle for seizing and carrying such machine single-handed. The carrying handle, in particular when seized single-handed during such carrying: extends over and above said beverage dispensing area; and/or has a seizure surface forming a loop in cross-section around the mixing unit and/or the beverage outlet, the seizure surface being seizable by a single human hand over a predominant part of the cross-sectional loop.

US 2015/144003 A1 relates to a system for producing a beverage from portioned ingredients provided within a capsule or pod, the system including a base station including a (e.g. removable) water reservoir of large capacity, and an autonomous beverage preparation module including an extraction head and being removably connectable to the base station from an autonomous-use mode to dockeduse mode. The autonomous module includes a water inlet connection member. The autonomous module and the base station respectively include matching positioning members which engage when the beverage preparation module is connected to the base station in the docked position, and the system includes alternative water supply members and water outlet connection members adapted for connecting to the water inlet connection member of the module for supplying water to the module when the module is in the autonomous-use mode.

KR 101 798 179 B1 relates to a cooking apparatus.

WO 2021/122492 A1 presents a machine for preparing a beverage that has a beverage processing unit, a water source; a water guide; one or more electric devices; and a support structure having a base that comprises a main outside housing, a fluid line support and a supporting foot at a bottom of the main outside housing.

WO 03/056987 A1 relates to a device for the extraction of a substance for preparing a beverage from a capsule.

### Disclosure

### Technical Problem

The present disclosure is intended to solve the conventional problems as described above, and an objective of the present invention is to locate components for supplying water and components for extracting a beverage from a capsule by being spaced apart from each other in separate spaces.

An objective of the present invention is to locate components for supplying water in a base and locate components for extracting a beverage from the capsule in an extraction part being spaced apart from the upper portion of the base.

An objective of the present invention is to allow the position of the extraction part to be adjusted relative to the base above the base.

An objective of the present invention is to vary a height at which an extracted beverage is discharged depending on the height of a cup used.

An objective of the present disclosure is to allow the extraction part to be supported by leg drive units that adjust the position of the extraction part above the base.

An objective of the present disclosure is to adjust a connection angle between a support link and a connecting link by varying each of the lengths of the leg drive units.

An objective of the present disclosure is to position the center of gravity on the base which supports the extraction part.

An objective of the present invention is to place a water supply part within the base.

An objective of the present disclosure is to place a display on the surface of the base.

An objective of the present disclosure is to equip the extraction part with multiple capsules so that a beverage may be extracted from each of the capsules simultaneously or sequentially.

An objective of the present disclosure is to enable water to be injected into each of the capsules by mounting the capsule within the extraction part and closing a cover.

An objective of the present disclosure is to ensure that the cover is opened and closed stably.

An objective of the present disclosure is to place a light source on the extraction part to display an operation state thereof.

An objective of the present disclosure is to facilitate the installation of the leg drive units for adjusting the position of the extraction part.

An objective of the present disclosure is to facilitate the maintenance of the leg drive units.

An objective of the present disclosure is to increase utilization of space around the leg drive units.

An objective of the present disclosure is to minimize the height of the base.

An objective of the present disclosure is to minimize heat transfer from a pipe to the outside.

An objective of the present disclosure is to minimize noise generated within a beverage apparatus.

An objective of the present disclosure is to install the water tank within the base with minimized height.

An objective of the present disclosure is to facilitate the supply of water to the water tank.

An objective of the present disclosure is to facilitate the maintenance of the water tank.

An objective of the present disclosure is to locate a residual water tray assembly, which collects residual water, within the extraction part of a beverage extraction apparatus.

An objective of the present disclosure is to configure the inlet side of the residual water tray assembly, which collects residual water, to be open in a direction opposite to that of gravity inside the extraction part.

An objective of the present disclosure is to removably install the residual water tray assembly, which collects residual water, on the extraction part.

An objective of the present disclosure is to enable the beverage apparatus to operate automatically by inputting a simple operation command, thereby enabling the extraction of a beverage by using the capsule.

An objective of the present disclosure is to check whether the extraction part is level and, if not, to operate the extraction part to be level.

An objective of the present invention is to raise the extraction part so that a space for a cup is secured thereunder when the beverage apparatus is operated.

An objective of the present disclosure is to allow the plurality of capsules to be seated and a beverage to be discharged according to an extraction recipe according to a capsule selected from the plurality of capsules.

An objective of the present disclosure is to enable the adjustment of the direction and angle of the inclination of the extraction part.

An objective of the present disclosure is to display a beverage extraction process through the display and guide a user.

An objective of the present disclosure is to ensure that an extracted beverage is discharged smoothly from the capsule.

An objective of the present disclosure is to ensure that there is no residue inside the capsule for beverage extraction.

An objective of the present disclosure is to enable perforation of the capsule and extraction of beverage from the capsule in the direction of gravity.

An objective of the present disclosure is to enable an intuitive perception of where to place a cup on the base.

An objective of the present disclosure is to enable the use of cups of various heights and diameters.

An objective of the present disclosure is to ensure that the extraction part is stably supported on the base by the support legs.

### Technical Solution

In order to accomplish the objectives as described above, in the present invention, there is a beverage apparatus with an extraction part spaced apart on a base supported on a surface.

In the present disclosure, there may be components for extracting a beverage inside the extraction part. The extraction part, according to the present invention, is spaced apart from the base, and a space for seating a cup may be defined between the extraction part and the base.

In the present invention, the base includes a water supply part.

In the present invention, the height of the extraction part may be adjusted as the extraction part is moved up and down above the base.

In the present invention, support legs support the extraction part on the base, and have variable lengths to adjust the position of the extraction part on the base.

In the present invention, the position of the extraction part relative to the base is adjusted by the support legs, so that a height at which an extracted beverage is discharged may be varied depending on the height of a cup.

In the present disclosure, the support legs may include leg drive units of variable lengths. Accordingly, the extraction part may be supported on the base by the leg drive units, and the position of the extraction part may be adjusted by varying the length of each of the leg drive units.

In the present disclosure, each of the support legs may further include a support link and a connecting link. A connection angle between the support link and the connecting link may be varied by the leg drive unit.

In the present invention, the water supply part is positioned in the base, which may be supported on a surface, so that the center of gravity of the entire device may be positioned on the base. When a water tank is positioned inside the base, the base may be supported more stably on the surface.

In the present disclosure, a display may be placed on the base, which is supported on a surface. The display may be a touch display installed on a lower surface of a tempered glass on a base top plate.

In the present disclosure, the extraction part may be provided with a plurality of capsule sitting spaces so that a plurality of capsules is mounted therein. A valve and pump may be installed to separately supply water to each of the capsules. Therefore, beverages may be extracted in various forms simultaneously or sequentially from the plurality of capsules.

In the present disclosure, a cap that presses each of the capsules may be positioned in a cover that opens and closes the capsule sitting spaces of the extraction part, and a perforator that forms a hole in the capsule may be provided in the cap. Therefore, the closing operation of the cover may form the hole in the capsule, allowing water to be injected thereto.

In the present disclosure, in order to open and close the cover, drive gears of a moving component installed on the cover operate in cooperation with rack gears of a movement guide structure installed on a frame of the extraction part. Accordingly, the cover may be opened and closed smoothly.

Particularly, in the present disclosure, the cover has a moving guide, and the frame has a fixed guide that guides the movement of the moving guide, so that the movement of the cover may be accurately guided.

In the present disclosure, a light source may be installed on the cover. The light source may include multiple light sources installed to emit light in various ways depending on the operating status of a beverage apparatus.

In the present disclosure, the multiple leg drive units may be used, and a connection frame having frame bodies, which are multiple pieces, coupled to each other may be used to mount the multiple leg drive units to the extraction part. Accordingly, the leg drive units may be easily installed on and removed from the connection frame fixed to the extraction part.

In the present disclosure, the drive source of each of the leg drive units may be mounted to a fixing frame by a bracket. This configuration simplifies the task of removing and installing the drive source from and on the leg drive unit.

In the present disclosure, a drive source constituting the leg drive unit may be installed on the fixing frame through which a rotation shaft or a lead screw rotated by the drive source passes, and the fixing frame may be connected to the extraction part. In this configuration, the fixing frame may be positioned at the same location as the rotation shaft or the lead screw, thereby enabling better utilization of a space around the drive source.

In the present disclosure, the base is constructed in the shape of a plate. The height of the entire apparatus may be reduced by making the base plate-shaped.

In the present disclosure, an internal pipe or a connecting pipe may be configured as a double pipe with an insulating layer. This configuration may minimize the transfer of heat to the outside.

In the present disclosure, a centrifugal pump may be used to supply water from the water supply part.

In the present disclosure, the water tank of a plate shape inside the base of a plate shape may be configured to be introduced into and removed from the side surface of the base.

In the present disclosure, a water tank entrance for supplying water to a storage space inside the water tank may be provided in a cover plate constituting the upper surface of the water tank.

In the present disclosure, the cover plate may be detachable from a water tank body.

In the present disclosure, the residual water tray assembly may be installed within the extraction part from which a beverage is extracted so that the residual water tray assembly is never exposed to the outside.

In the present disclosure, the inlet of the residual water tray assembly within the extraction part from which a beverage is extracted may be installed to be open so as to be directed in a direction opposite to that of gravity.

In the present disclosure, the residual water tray assembly may be magnetically attached to and detached from a housing of the extraction part.

According to the present invention, a beverage apparatus according to claim 1 is provided.

The base may be configured to supply water through the support legs to the extraction part.

The water supply part may include the water tank installed inside the base.

The support leg may include the leg drive unit having a variable length, wherein the leg drive unit may have a first side connected rotatably relatively to the extraction part and have a second side installed rotatably relatively on the base.

The base may have a plate-shaped appearance and be provided with the display for displaying operating status thereof on an upper surface thereof.

A partition wall may be provided inside the base, wherein a controller and the water tank may be located on a first side and a second side, respectively, partitioned by the partition wall.

The water tank may be formed in a plate shape and be introduced and removed through the side surface of the base, and may include the water tank body in which the storage space is formed inside, and the cover plate that constitutes the upper surface of the water tank body and is detachable therefrom.

The multiple capsule sitting spaces may be formed in a capsule seat provided inside the extraction part forms multiple capsule sitting spaces, so that beverages may be extracted from the multiple capsules simultaneously or sequentially.

The extraction part may include the frame, the housing which is mounted to the frame and constitutes an exterior thereof, and the cover which is seated on the frame and opens and closes the capsule sitting spaces.

The extraction part may further include the residual water tray assembly detachably installed on an opening part thereof open toward the base to receive remaining water.

The residual water tray assembly may be magnetically attached to the extraction part.

The residual water tray assembly may include a first tray in which residual water or moisture generated from the extraction part is located, a second tray in which the first tray is seated to be rotatable relatively, which installed to be rotatable in the opening part, with remaining water provided therein, and a rotation center shaft that serves as the rotation center of the first tray and the second tray.

According to the present disclosure, the beverage apparatus using a capsule of the present disclosure may include the base seated on a surface, the extraction part located above the base and configured to extract a beverage from the capsule mounted therein, the support legs which support the extraction part on the base so that the extraction part is movable, and the residual water tray assembly installed detachably on the opening part formed to be open toward the base in the housing of the extraction part so as to receive residual water generated after extracting the beverage from the extraction part.

The residual water tray assembly may include the first tray in which residual water or moisture generated inside the extraction part is located, the second tray on which the first tray is seated rotatably relatively and which is installed rotatably inside the opening part, with the second tray having residual water pools, and the rotation center shaft that is the rotation center of the first tray and the second tray.

The first tray and the second tray may be rotatably installed on a first side of the rotation center shaft, and a mounting part may be provided on a second side of the rotation center shaft so that the mounting part may be directionally mounted in a mounting groove formed in the housing.

The mounting part may be magnetically attached to the mounting groove.

The first tray may include a first tray body of flat cylindrical shape, and a seating ring protruding by surrounding the entrance of the first tray body, and the second tray may include a second tray body having a seating space which is formed therethrough vertically and in which the first tray is seated, with second tray body having the residual water pools, and an outer ring which is formed by surrounding the upper portion of the second tray body and on which the first tray is rotatably seated.

A rotation center hole in which the rotation center shaft is positioned may be formed at the center of the bottom of the first tray, and extraction through-holes may be formed at positions corresponding to discharge pipes for discharging beverages extracted from the extraction part.

Multiple residual water holes having sizes to hold residual water may be formed on the bottom of the first tray.

A pair of first stop protrusions may be formed on one side of the rotation center shaft to regulate the rotation angle of the first tray, a first holding protrusion may be formed on the first tray at a corresponding position between the pair of first stop protrusions, a pair of second stop protrusions which regulate the rotation angle of the second tray may be formed on the seating ring of the first tray, and a second holding protrusion may be formed on the second tray at a corresponding position between the pair of second stop protrusions.

The rotation center shaft may be provided with a first coupling disk and a second coupling disk which are coupled to each other and decoupled from each other, and the first tray and the second tray may be rotatably positioned between the first coupling disk and the second coupling disk.

According to the present disclosure, the beverage apparatus of the present disclosure may include the base seated on a surface, the extraction part positioned above the base and configured to extract a beverage from the capsule mounted therein, the support legs which support the extraction part on the base so that the extraction part is movable, the first tray mounted on the opening part open toward the base in the housing constituting the exterior of the extraction part to receive residual water generated after extracting the beverage from the extraction part, and the second tray having the residual water pools, and in the residual water tray assembly, the first tray may be installed on the opening part so that the first tray is open in a direction opposite to that of gravity toward the inside of the housing.

The first tray and the second tray may be rotatably installed on the rotation center shaft, and the rotation center shaft may be provided with the mounting part that is magnetically mounted to the housing by having directionality.

On the bottom of the first tray, the rotation center hole in which the rotation center shaft is located may be formed, the extraction through-holes through which a beverage extracted from the extraction part passes, and the residual water holes in which residual water is held may be formed.

The residual water pools in the second tray may be rotated between positions corresponding to the extraction through-holes in the first tray and positions away from the extraction through-holes.

A first tray drive source may be provided to allow the first tray to rotate between corresponding and non-corresponding positions between the extraction through-holes of the first tray and the discharge pipes through which a beverage extracted from the extraction part passes.

A first drive roller for transmitting the driving force of the first tray drive source to the first tray by using friction, and a second drive roller for transmitting the driving force of the second tray drive source to the second tray by using friction may be provided.

A first drive gear for transmitting the driving force of the first tray drive source to the first tray by means of a gear, and a second drive gear for transmitting the driving force of the second tray drive source to the second tray by means of a gear may be provided.

According to the present disclosure, the beverage apparatus of the present disclosure may include the base seated on a surface, the extraction part located above the base and configured to extract a beverage from the capsule mounted therein, the support legs which support the extraction part on the base so that the extraction part is movable, and the residual water tray assembly located inside the extraction part and installed to be exposed through the lower portion of the extraction part to receive residual water generated after extracting the beverage from the extraction part.

The residual water tray assembly may include the first tray in which the multiple residual water holes holding residual water may be formed on the bottom thereof, and the extraction through-holes through which a beverage extracted from the extraction part passes may be formed, with the first tray facing the inside of the extraction part, and the second tray in which the seating space allowing the first tray to be seated therein and formed by penetrating the second tray vertically may be formed, with the second tray being rotatable so that the residual water pools are selectively located under the extraction through-holes.

The residual water tray assembly may further include the rotation center shaft on which the first tray and the second tray are rotatably installed, and the rotation center shaft may be provided with the mounting part having directionality to be fixed to the extraction part.

The second tray may be driven by the second tray drive source and rotated about the rotation center shaft.

The first tray may be driven by the first tray drive source and rotated about the rotation center shaft.

In the present disclosure, the multiple leg drive units may support the extraction part on the base and may vary the lengths of the leg drive units uniformly so as to adjust the height of the extraction part.

In the present disclosure, the inclination of the extraction part may be adjusted by varying the lengths of the multiple leg drive units differently.

The present disclosure may include the extraction part in which the capsule is seated and which extracts a beverage corresponding to the capsule by supplying water to the capture. In the extraction part, the housing may be coupled to the lower portion of the frame, and the cover may be coupled to the upper portion of the frame.

The extraction part is supported by the plurality of support legs and may be moved up and down by the driving of the support legs. Specifically, the support legs may be coupled to the housing constituting the extraction part, and the housing may be raised and lowered by driving the support legs. The support legs may be driven by a first drive source.

The capsule may be seated on the upper surface of the housing, and the cover may be raised and lowered to open and close the upper surface of the housing. When the cover is raised, the upper surface may be opened, and when the cover is lowered, the upper surface may be closed. The cover may be raised or lowered by the moving component, and the moving component may be driven by a second drive source.

When the operation command is input to the beverage apparatus, the support legs connected to the housing and the moving component connected to the cover may be driven, thereby raising the housing and the cover. Afterwards, when it is detected that the capsule is seated on the upper surface of the housing, the moving component may be driven to lower the cover. When a cup is recognized under the housing after the cover is lowered, the support legs may be driven to lower the housing to a set distance from the cup. When the housing is lowered, water may be supplied to the capsule so that a beverage may be extracted into the cup. When the extraction of the beverage is completed, the support legs may be driven to raise the housing.

As for the input of the operation command, the operation command may be input when a touch sensor installed on one surface of the cover is touched or when a voice for the operation command is recognized by a voice recognition part.

When the operation command is input, the housing may rise to a set maximum height, thereby securing maximum space for placing a cup under the housing.

After the cover is lowered, when a cup is recognized under the housing, a distance sensor installed on the lower surface of the housing may measure a distance to the cup, and the support legs may be driven until the measured distance is the set distance to lower the housing. When the measured distance is the set distance, the operations of the support legs may stop and the lowering of the housing may be completed.

Here, when the measured distance is greater than the set distance, the housing may be lowered until the measured distance is the set distance, and conversely, when the above measured distance is less than the set distance, the housing may be raised until the measured distance is the set distance.

When the seating of the capsule on the upper surface of the housing is detected and the cover is lowered, the cover may be lowered after a set time has elapsed after the seating of the capsule is detected. This may prevent the cover from hitting the hand of a user during the lowering of the cover when the user manually seats the capsule. The set time may preferably be one to three seconds.

In the present disclosure, the extraction part may be maintained to be horizontal. An inclination sensor installed in the extraction part may measure the inclination of the extraction part, and the support legs may be driven on the basis of the measured inclination so that the extraction part is horizontal. The support legs may be driven according to the inclination direction and inclination angle of the extraction part so that the extraction part is horizontal.

The plurality of support legs may be driven independently to arbitrarily adjust the inclination direction and inclination angle of the extraction part. This may allow a direction, in which the lower surface of the extraction part faces, to draw a set pattern. For example, by adjusting the inclination of the extraction part, the direction in which the lower surface of the extraction part faces may be a spiral or a circle.

The beverage apparatus of the present disclosure may include the base seated on a surface, the extraction part located above the base and configured to extract a beverage from the capsule mounted therein, and the support legs which are located on the base and support the extraction part so that the extraction part is movable.

The base may have the shape of a plate and may have the water supply part which is located inside the base and configured to supply water to the extraction part.

The water supply part may include the water tank installed to be introduced into and removed from the base, a main pump that pressurizes water in the water tank to send the water to the extraction part, and a boiler that sets the temperature of the water.

The display may be positioned to be exposed to the upper surface of the base.

The display may include a touch display module installed on the inner surface of the tempered glass.

The support legs may include the leg drive units of variable lengths, respectively, and each of the leg drive units may have the first side connected rotatably relatively to the extraction part and have the second side installed rotatably relatively on the base.

A joint having a connecting bar that is operated by the relative rotation of a ball and a socket may be installed on the base, and the leg drive unit may be connected rotatably relatively to the connecting bar of the joint.

The support link may be installed to be connected to the joint so that the support link is rotatable relatively to the first side of the leg drive unit, and the connecting link may be installed to be connected to the second side of the leg drive unit so that the connecting link is rotatable relatively thereto and to be connected to the second side of the support link so that the connecting link is rotatable relatively thereto, so the connection angle between the support link and the connecting link may be adjusted.

The extraction part may have the distance sensor installed at a position thereof facing the base so as to measure a distance to a cup seated on the base.

In the present disclosure, it is possible to include the base fixed to a surface and formed in a plate shape, the extraction part located movably above the base and configured to extract a beverage from the capsule mounted therein, and the multiple support legs located on the base and arranged at predetermined intervals to support the extraction part so that the height and inclination of the extraction part are adjustable.

The support leg may include the leg drive unit having a variable length.

The leg drive unit may be configured to allow an outer member to move longitudinally with respect to an inner member, so that the length of the leg drive unit may be varied.

The support leg may be provided with the support link and the connecting link, which may be connected to each other so as to be able to rotate relative to each other, wherein the support link may be connected to the base, and the connecting link may be connected rotatablely relatively to the extraction part.

The leg drive unit may be installed so that opposite sides thereof are connected respectively to the support link and the connecting link which are connected to each other so as to be able to rotate relative to each other, and the connection angle between the support link and the connecting link may be set as the length of the leg drive unit changes.

The multiple support legs having the leg drive units may be arranged to have predetermined angular intervals.

The upper surface of the base may further be provided with the display that indicates an operating status.

The display may be provided with the touch display module capable of receiving touch signals.

The base includes the water supply part provided therein, wherein the water supply part may include the water tank in which water is stored, the main pump which pressurizes the water in the water tank to send the water to the extraction part, and the boiler which sets the temperature of the water.

In the present disclosure, it is possible to include the base seated on a surface and formed in a plate shape, the display provided on the surface of the base to display information and receive signals, the extraction part located movably above the base and configured to extract a beverage from the capsule mounted therein, and the support legs located on the base and arranged at predetermined intervals to support the extraction part so that the height and inclination of the extraction part are adjustable, with the support legs respectively having the leg drive units with variable lengths.

The controller and the water supply part may be installed inside the base, wherein the water supply part may include the water tank installed to be introduced into and removed from the base, the main pump which pressurizes water in the water tank to send the water to the extraction part, and the boiler which sets the temperature of the water.

In the present disclosure, it is possible to include the base seated on a surface, the extraction part located above the base and configured to extract a beverage from the capsule mounted therein, and the support legs located on the base and having the leg drive units with lengths variable to support the extraction part so that the extraction part is movable, with each of the leg drive units having the first side connected rotatably relatively to the base and the second side connected rotatably relatively to the extraction part.

According to the present disclosure, it is possible to include the base seated on a surface and having the water supply part, the extraction part located above the base and having the capsules mounted in the multiple capsule sitting spaces present in the capsule seat provided inside to extract beverages, and the support legs which are located on the base and support the extraction part so that the extraction part is movable.

According to the present disclosure, the extraction part may include the frame, the housing which is mounted to the frame and constitutes the exterior thereof, and the cover which is seated on the frame and opens and closes the capsule sitting spaces.

In the present invention, the beverage apparatus includes the base, and the extraction part which is arranged above the base by being spaced apart therefrom to have a space, in which a cup is located, between the extraction part and the base, and has a space, in which the capsule is mounted, formed therein to extract a beverage from the capsule.

In the present disclosure, the water supply part, which supplies water for extracting a beverage from the capsule in the extraction part, may be placed in the extraction part or outside the extraction part and the base.

The extraction part is supported by the support legs above the base and arranged to be spaced apart from the base.

A first side of the support leg may be connected to the extraction part, and a second side thereof may be connected to the base.

The extraction part is supported above the base by a plurality of support legs.

The base may be configured to supply water through the support legs to the extraction part.

The support legs may include a pair of front legs respectively connected to and installed on opposite front sides of the base, and a rear leg positioned near the rear of the base.

The pair of front legs may be arranged to be spaced apart from each other on opposite sides relative to the capsule sitting space of the extraction part.

The first side of each of the pair of front legs may be connected to the upper surface of the base, and the second side thereof may be connected to the extraction part. Here, a part at which the first side of the front leg is connected to the base may be outside an area of the width of the extraction part.

### Advantageous Effects

The beverage apparatus using a capsule according to the present disclosure may have at least one of the following effects.

In the present invention, the water supply part is located inside the base, and a configuration for extracting a beverage from the capsule by using water supplied from the water supply part is located inside the extraction part. That is, the base and the extraction part are separated into separate housings, and parts thereof are positioned separately. Accordingly, by separating the base and the extraction part from each other, the extraction part may be made relatively small.

In the present invention, the extraction part is positioned so as to be able to be raised and lowered above the base. Accordingly, a cup may be placed on the base and the extraction part may be raised and lowered according to the height of the cup to provide a beverage to the cup.

In particular, since the extraction part is mainly made with a configuration for extracting a beverage from the capsule inside, a load for the raising and lowering of the extraction part may be relatively small, thereby enabling efficient up and down movement to be performed.

In the present disclosure, the extraction part may be positioned at a predetermined height by the support legs on the base. Accordingly, a cup may be positioned in a space formed between the base and the extraction part to receive a beverage coming out of the extraction part. In this structure, when the extraction part is raised and lowered by the support legs, cups of various sizes may be used.

In the present invention, the extraction part is positioned to be spaced apart from the base by the multiple support legs, and the support legs may be fixed to the front opposite edges of the base. Accordingly, this has the effect of making it easier to position a cup on the base between the support legs.

The beverage apparatus of the present invention allows to adjust the position of the extraction part by controlling the support legs. The relative position of the extraction part with respect to the base is changed by the operations of the support legs that support the extraction part above the base.

In the present disclosure, by detecting the height of a cup, the position of the extraction part relative to the base may be adjusted, so that a position at which an extracted beverage is discharged into the cup may be varied depending on the cup, thereby allowing the beverage to be introduced into the cup more accurately.

In the present disclosure, the extraction part may be supported by the leg drive units whose lengths are variable with respect to the base. The leg drive units have the characteristics of variable lengths, so that the position of the extraction part with respect to the base may be adjusted, and the inclination of the extraction part may also be freely adjusted by using the multiple leg drive units and adjusting the lengths of these leg drive units to be different.

In the present disclosure, the support link and the connecting link may be connected to each of the leg drive units so as to be able to rotate relatively to each other, so that the connection angle of the support link and the connecting link may be changed according to change in the length of the leg drive unit. With this configuration, the connection state of the support link and the connecting link changes depending on the position of the extraction part, so that the appearance of the beverage apparatus may have more diverse forms, thereby satisfying an emotion of a user.

In the present disclosure, components such as the water supply part and the controller are placed in the base. Particularly, by installing the water tank, the main pump, the boiler, etc., which constitute the water supply part, inside the base, the center of gravity of the beverage apparatus as a whole is at the base or at a position adjacent to the base, which has the effect of increasing the installation stability of the beverage apparatus.

In the present disclosure, the display may be installed on the upper surface of the base. Since the base has a flat hexahedral shape, the area of an upper surface thereof may be secured to be relatively large, and the display may be installed thereon, so the display with a relatively large area may be placed. Accordingly, the display has the effect of providing a lot of information to a user. In particular, by making the display touch-enabled, there is the effect of enabling a user to manipulate the beverage apparatus more easily.

In the present disclosure, the plurality of capsule sitting spaces may be placed in the extraction part. In addition, valves and pumps are used to supply water to each of the capsules seated in the capsule sitting spaces to enable extraction from the plurality of capsules simultaneously or sequentially, thereby making a variety of beverages. For example, there is the effect of being able to provide beverages in various ways, such as making multiple cups of the same beverage at the same time, making an increased amount of the same beverage, making different types of beverages at the same time, or making a mixed beverage by mixing different types of beverages.

In the present disclosure, the cover may be configured to be raised and lowered relative to the frame of the extraction part, wherein the cover may have the cap having the perforator, so that the capsule in the capsule sitting space may be pressed during the closing motion of the cover to form a through-hole in the capsule by the perforator. Accordingly, since a user does not need to provide a separate force to form the through-hole in the capsule and the through-hole can be formed in the capsule by utilizing the closing motion of the cover, there is no need to employ a separate structure for forming the through-hole, thereby simplifying the overall configuration of the beverage apparatus.

In the present disclosure, the cover may be opened and closed to mount the capsule in the extraction part and remove the used capsule therefrom. The cover may be provided with components, such as a pump and a valve, to control the water supply, and the cap that presses the capsule. In order to guide the opening and closing movements of the cover including these components, the fixed guide and the moving guide are placed to guide each other, and drive gears move in conjunction with the rack gears to perform the opening and closing movements of the cover. Accordingly, there is the effect of ensuring that the opening and closing movements of the cover are performed accurately along a set trajectory.

In the present disclosure, the light source that provides light is placed inside the cover. The light source may provide light depending on the operating status of the beverage apparatus. Accordingly, there is the effect that a user may determine the operating status through light provided in various ways from the light source during the operation of the extraction part.

In the present disclosure, the connection frame, which is comprised of multiple frame bodies connected to each other, may be used to connect the multiple leg drive units, which adjust the position of the extraction part while supporting the extraction part above the base, to the extraction part. Accordingly, these frame bodies and the leg drive units may be sequentially assembled and disassembled, thereby further facilitating the installation and disassembly of the leg drive units.

In the present disclosure, in the leg drive unit that controls the position of the extraction part, the drive source is configured to be fixed to the fixing frame by the bracket. With this configuration, the drive source may be easily disassembled and assembled from and with the fixing frame during the disassembly and assembly processes of the leg drive source, thereby making maintenance of the leg drive unit easier overall.

In the present disclosure, the extraction part may be movably supported by the multiple leg drive units, and the fixing frame, which is a component for fixing the drive source used in each of the leg drive units, is configured such that the rotation shaft rotated by the drive source and the lead screw pass therethrough. Accordingly, since the component for fixing the drive source surrounds the component rotated by the drive source, the structure used for fixing the drive source may occupy a minimum of space around the drive source. This configuration may have the effect of more efficiently using the space inside the extraction part on which the leg drive units are installed.

In the present disclosure, the base supported on a surface may be formed into a plate shape. The base may be formed into a plate shape in this way to minimize the height of the base, thereby supporting the support legs positioned on the base and the extraction part more stably.

In the present disclosure, the internal pipe used in the water supply part or the connecting pipe that supplies water from the water supply part to the extraction part can be configured as a structure having the insulating layer between an internal pipe body and an external pipe body. This structure minimizes the release of heat to the outside of the internal pipe or the connecting pipe, thereby optimizing the temperature of a beverage and preventing a user from being injured by heat.

In the present disclosure, the centrifugal pump is used as the main pump. Accordingly, there is also an effect that may minimize noise generated from the water supply part of the base.

In the present disclosure, the water tank with the shape of a plate is installed inside the base, which is in the shape of a plate. Accordingly, the water tank is located within the base and thus does not affect the appearance of the base, thereby increasing the design freedom of the base.

In the present disclosure, the water tank with the shape of a plate is introduced and removed through a water tank inlet/outlet formed on the side surface of the base, and the water tank entrance for supplying water to the storage space inside the water tank is formed on the cover plate constituting an upper surface thereof with a relatively large area. Accordingly, there may be easy to supply water to the storage space of the water tank.

In addition, the cover plate may be detachable from the water tank body. According to this structure, a user may easily access the inside of the storage space, thereby facilitating cleaning of the storage space.

In the present disclosure, the residual water tray assembly may be installed inside the housing of the extraction part, and an extracted beverage may pass through the residual water tray assembly and be delivered to a cup at the base at the bottom through the discharge pipes. Accordingly, the residual water tray assembly is located inside the housing, thereby preventing the residual water tray assembly from being affected by the external environment, and the residual water tray assembly is only partially exposed through the lower portion of the housing, thereby making the appearance of the beverage extraction apparatus more aesthetic.

In addition, the residual water tray assembly is positioned within the housing of the extraction part, with an entrance thereof open in a direction opposite to that of gravity. Accordingly, it is virtually impossible for foreign substances to be transferred from outside to the residual water tray assembly. Accordingly, the residual water tray assembly is prevented from being contaminated by external foreign substances, etc., thereby enabling more hygienic maintenance of the residual water tray assembly.

In addition, in the present disclosure, the residual water tray assembly is configured to be magnetically attached and detached within the housing constituting the exterior of the extraction part. Accordingly, the mounting and detaching of the residual water tray assembly to and from the opening part of the housing may be simple and convenient. Accordingly, the residual water tray assembly may be easily cleaned, thereby enabling more hygienic maintenance of the residual water tray assembly.

In the present disclosure, the residual water tray assembly may be mounted on the opening part formed on the lower part of the housing of the extraction part. Accordingly, the area of the upper surface of the base on which the extraction part is supported and the cup is placed may be used more efficiently. Particularly, in the present disclosure, the area of the base may be used as the display, thereby providing a wider display.

In addition, in the present disclosure, the residual water tray assembly may consist of the first tray and the second tray to collect residual water in two stages. More specifically, the first tray and the second tray may be configured to be able to rotate respectively, so that the residual water holes of the first tray and the residual water pool of the second tray may be appropriately utilized to prevent the residual water from falling. Accordingly, there is also the effect of completely blocking residual water from falling downward by penetrating the residual water tray assembly.

In the present disclosure, the extraction part is supported above the base by the multiple leg drive units, and by varying the lengths of the multiple leg drive units at certain levels, the height of the extraction part may be adjusted, so that the height of the extraction part may be varied according to the height of a cup, thereby enabling a beverage to be delivered to the cup more accurately.

In the present disclosure, by making the lengths of the multiple leg drive units different, the inclination of the extraction part may be adjusted. For example, the inclination of the extraction part may be adjusted in this way, thereby enabling a latte art function to be performed during coffee extraction, or a rotation effect of the extraction part may be provided by inclining the extraction part, thereby enabling extraction of various beverages.

In the present disclosure, the operation command of the beverage apparatus may be input by simple touch or voice recognition, and when the operation command is input, the beverage apparatus may automatically operate and proceed to extract a beverage. Accordingly, a beverage may be extracted from the beverage apparatus by simple manipulation of a user.

In the present disclosure, the extraction part from which a beverage is extracted may be provided with an inclination sensor, so that the extraction part may be maintained horizontal on the basis of inclination measured by the inclination sensor. Accordingly, the beverage apparatus may be used stably and the beverage may be extracted safely.

In the present disclosure, the plurality of support legs may be driven separately to arbitrarily adjust the inclination direction and inclination angle of the extraction part. Accordingly, a beverage may be extracted in any direction, thereby adding decoration to the beverage.

In the present disclosure, the capsule is positioned in the capsule sitting space so that the portion of the capsule with a relatively large cross-section is directed to the direction of gravity. In addition, force is applied to the capsule downward from an upper portion thereof to perforate the capsule, and water is supplied thereto in the direction of gravity to extract a beverage from the capsule. Accordingly, there is the effect that the beverage extracted from the capsule is discharged more smoothly from the capsule and no residue remains inside the capsule.

In the present disclosure, an aluminum cap of the capsule having a relatively large cross-sectional area may be opened relatively easily on the protrusions of the bottom of the capsule sitting space by the hydraulic pressure of water and pressing force applied during the perforation process by the perforator. Accordingly, a beverage may be discharged more smoothly from the inside of the capsule.

In addition, in the present disclosure, after force for perforating the capsule is applied thereto in the direction of gravity, a structure for the perforation moves in a direction opposite to that of gravity. Even if the structure for the perforation and the capsule move together, the capsule may remain in the capsule sitting space due to gravity without being carried along with the cap.

In addition, in the present disclosure, by raising and lowering the cover, the perforator may be raised and lowered to perforate the capsule. The cap on which the perforator is installed is raised and lowered in the direction of gravity to cover the capsule mounted in the capsule sitting space, thereby allowing the perforation and beverage extraction. After the beverage extraction, the capsule may be raised in the opposite direction of that of gravity so that the capsule is exposed to the inside of the capsule sitting space, thereby facilitating the installation and removal of the capsule.

In addition, in the present disclosure, a beverage discharged from the capsule may fall directly in the direction of gravity, and in particular, the beverage may be discharged from the capsule through a relatively large flow cross-sectional area thereof, thereby enabling beverage extraction to be performed in a relatively short time.

In the present invention, the base and the extraction part are spaced apart from each other by the support legs to form a space in which a cup is positioned between the base and the extraction part. Accordingly, to allow for the use of a relatively tall cup, the lengths of the support legs may be adjusted without having to enlarge the overall appearance.

In addition, in the present disclosure, the extraction part is supported above the base by using the support legs, and the front legs are positioned on the opposite edges of the front of the base so as to have a width larger than the width of the extraction part. The front legs are arranged in this way, thereby allowing a user to intuitively know how to position a cup in a space between the extraction part and the base, and facilitating the positioning of the cup.

In addition, in the present disclosure, the plurality of support legs is connected to the base in an area larger than the width of the extraction part while supporting the extraction part. Therefore, a cup having a diameter larger than the width of the extraction part may be used.

In addition, there is also the effect that an area in which the plurality of support legs are connected to the base is larger than an area corresponding to the width of the extraction part, so that the extraction part may be stably supported above the base by the support legs.

### Description of Drawings

FIG. 1 is a perspective view showing an exemplary embodiment of a beverage apparatus according to the present disclosure.
FIG. 2 is a front view showing the beverage apparatus of the embodiment of the present disclosure.
FIG. 3 is operation state views showing the height of an extraction part being adjusted by leg drive units in the beverage apparatus of the embodiment of the present disclosure.
FIG. 4 is a perspective view showing the configuration of support legs constituting the embodiment of the present disclosure.
FIG. 5 is an enlarged perspective view of the configuration of the support legs constituting the embodiment of the present disclosure.
FIG. 6 is a cross-sectional view showing a state in which the length of each of the leg drive units is shortest in the embodiment of the present disclosure.
FIG. 7 is s a cross-sectional view showing a state in which the length of the leg drive unit is longest in the embodiment of the present disclosure.
FIG. 8 is an exploded perspective view showing components of a connection frame used in the embodiment of the present disclosure.
FIG. 9 is a perspective view showing configuration of the leg drive unit used in the embodiment of the present disclosure.
FIG. 10 is an exploded perspective view showing the components of the leg drive units illustrated FIG. 9.
FIG. 11 is a cross-sectional view showing internal configuration of the leg drive unit illustrated in FIG. 9.
FIG. 12 is a perspective view with an outer member removed from the leg drive unit illustrated in FIG. 9.
FIG. 13 is an exploded perspective view showing configuration for assembly and disassembly of the leg drive unit illustrated in FIG. 9.
FIG. 14 is a cross-sectional perspective view showing a state in which the connecting link and the leg drive unit are connected to the connection frame to be concentric and relatively rotatable in the embodiment of the present disclosure.
FIG. 15 is a perspective view showing the inside of the extraction part from which a cover is removed in the embodiment of the present disclosure.

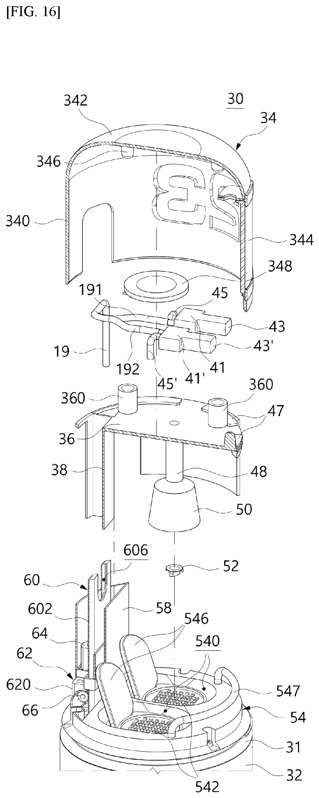

FIG. 16 is an exploded perspective view showing the extraction part constituting the embodiment of the present disclosure.
FIG. 17 is a front cross-sectional view showing the internal configuration of the extraction part constituting the embodiment of the present disclosure.

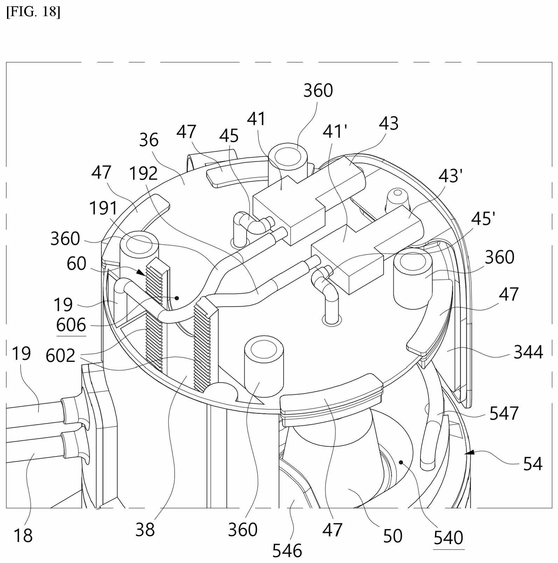

FIG. 18 is a perspective view showing configuration of a fixing plate installed in the extraction part constituting the embodiment of the present disclosure.
FIG. 19 is a perspective view showing the configuration of the fixing plate and the cap used in the extraction part in the embodiment of the present disclosure.
FIG. 20 is a cross-sectional perspective view showing the configuration of the cap and a perforator that constitute the extraction part in the embodiment of the present disclosure.
FIG. 21 is a perspective view of the perforator used in the extraction part in the embodiment of the present disclosure.
FIG. 22 is a perspective view showing a capsule seat used in the extraction part in the embodiment of the present disclosure.
FIG. 23 is an exploded perspective view showing components that transmit power to open and close the cover in the embodiment of the present disclosure.
FIG. 24 is a perspective view showing a residual water tray assembly installed in a housing in the embodiment of the present disclosure.
FIG. 25 is a cross-sectional perspective view showing the inside of the housing and the configuration of the residual water tray assembly constituting the embodiment of the present disclosure.
FIG. 26 is an exploded perspective view showing the residual water tray assembly constituting the embodiment of the present disclosure.
FIG. 27 is a perspective view showing another embodiment of the residual water tray assembly constituting the embodiment of the present disclosure.
FIG. 28 shows operation state views sequentially showing the operation of the residual water tray assembly in the embodiment of the present disclosure.
FIG. 29 shows operation state views sequentially showing that the cover is opened, the capsule is seated on the capsule seat, and then the cover is closed in the embodiment of the present disclosure.
FIG. 30 shows operation state views sequentially showing that the capsule is installed in a capsule sitting space of the capsule seat in the embodiment of the present disclosure.
FIG. 31 is a perspective view showing that a base top plate is removed for showing components installed inside a base constituting the embodiment of the present disclosure.
FIG. 32 is a plan view showing the components installed inside the base constituting the embodiment of the present disclosure after removing the base top plate.
FIG. 33 is a perspective view showing the water tank protruding through a water tank inlet/outlet of the base constituting the embodiment of the present disclosure.
FIG. 34 is a perspective view showing the configuration of the water tank used in the embodiment of the present disclosure.
FIG. 35 is an exploded perspective view of the water tank used in the embodiment of the present disclosure.
FIG. 36 is a cross-sectional perspective view taken along line 36-36' of FIG. 34.
FIG. 37 is a cross-sectional perspective view showing the configuration of an internal pipe used in the embodiment of the present disclosure.
FIG. 38 is a block diagram schematically showing connection between a controller constituting the beverage apparatus components connected to the controller in the embodiment of the present disclosure.
FIG. 39 is a flowchart showing the operation of the beverage apparatus in the embodiment of the present disclosure.
FIG. 40 is a flowchart showing the process of adjusting the height of the extraction part in the beverage apparatus in the embodiment of the present disclosure.
FIG. 41 is a flowchart showing the process of leveling the extraction part in the beverage apparatus in the embodiment of the present disclosure.
FIG. 42 shows schematic views showing the discharge position of a beverage according to the inclination of the extraction part in the beverage apparatus in the embodiment of the present disclosure.
FIG. 43 is a view illustrating the inclination direction of the extraction section according to the arrangement and operation of three support legs, as an example.
FIG. 44 is a view showing a direction in which the extraction part tilts step by step by driving the three support legs.
FIG. 45 is a table showing the step-by-step inclination direction and inclination degree shown in FIG. 44.
FIG. 46 is a view showing the trajectory of a direction in which the lower surface of the extraction part faces at each step.
FIG. 47 is a view showing an example of FIG. 46 in which the trajectory is spiral.
FIG. 48 is a plan view showing an area in which the support legs and the extraction part are positioned on the base as another embodiment of the present disclosure.

### Best Mode

Hereinafter, some embodiments of the present disclosure are described in detail with exemplary drawings. When adding reference numerals to components in each drawing, it should be noted that identical components are given the same reference numerals as much as possible even if they are shown in different drawings. In addition, when describing the embodiments of the present disclosure, if a detailed description of the relevant known configuration or function is judged to hinder understanding of the embodiments of the present disclosure, detailed descriptions thereof will be omitted.

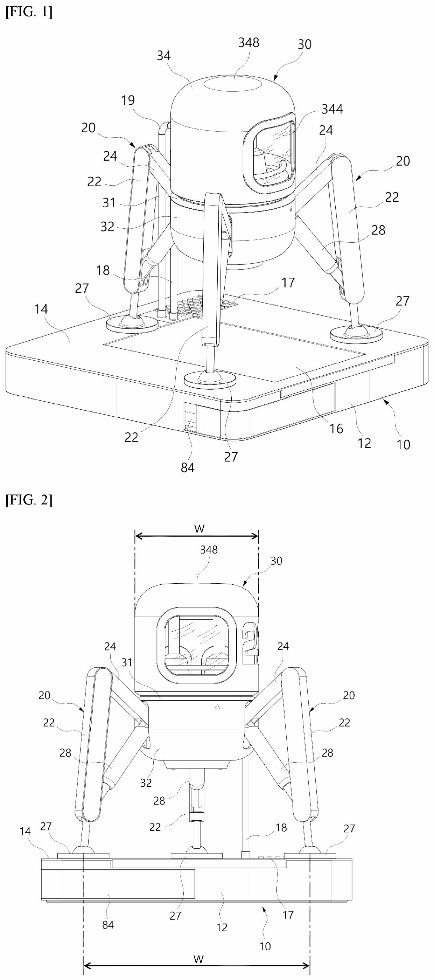

A beverage apparatus according to an embodiment of the present disclosure will be described with reference to the drawings. As is seen in FIGS. 1 and 2, a base 10 may be seated on the ground. The base 10 may have the shape of a plate with a predetermined thickness. In the illustrated embodiment, the base 10 has a flat hexahedral shape. However, if the base 10 has a flat shape, the base 10 may be made in various forms, such as a disc shape, polygonal plate shape, etc.

The base 10 may be composed of a base body 12 and a base top plate 14. A space in which a water supply part 82 and a controller 80 to be described below are installed may be formed inside the base body 12. The base top plate 14 may shield the space inside the base body 12 and constitute the upper surface of the base 10. A display 16 may be installed on the base top plate 14. In the illustrated embodiment, the display 16 is installed in an area including the lower portion of an extraction part 30 to be described below. For example, the display 16 may be configured such that a touch display module is attached to the inner surface of tempered glass constituting the upper surface of the base 10 using an OCA film. The tempered glass may constitute a portion of the base top plate 14. The tempered glass may substantially be the base top plate 14 to form the upper surface of the base 10.

The display 16 may be installed on the entirety of the base top plate 14 or only on a portion thereof. Of course, the display 16 may be installed on the entirety of the base top plate 14 and may be partially output. In the display 16, settings and commands of the beverage apparatus may be input by touching a screen through touch manipulation. Accordingly, the screen output through the display 16 may function as a manipulation part.

The display 16 may display the operating status of the apparatus. The display 16 may provide various pieces of information to a user. The display 16 which is able to be touch-input may be used. In this case, the extraction operation of a beverage may be manipulated by touch input via the display 16. The display 16 may receive inputs for the operation of the extraction part 30.

A mounting area 17 in which multiple protrusions protrude may be provided on one side of the base top plate 14 of the base 10. A decoration having a predetermined shape may be fitted and mounted over the protrusions of the mounting area 17 or between the protrusions thereof.

A power line 18 and a connecting pipe 19 may extend outward from one side of the base 10. The power line 18 provides a signal to operate components within the extraction part 30 from the controller 80 within the base 10. The connecting pipe 19 is intended to supply water from the water supply part 82 within the base 10 to the extraction part 30.

The power line 18 and the connecting pipe 19 have lengths sufficient to ensure movement of the extraction part 30 and a cover 34 to be described below. In the illustrated embodiment, the power line 18 and the connecting pipe 19 extend from the base 10 and enter the interior of the extraction part 30 through one side of the outer surface of the extraction part 30. Alternatively, the power line 18 and the connecting pipe 19 may enter the inside of the extraction part 30 through the lower portion of the extraction part 30. That is, the portions of the power line 18 and the connecting pipe 19 exposed to the outside may be minimized. Alternatively, the power line 18 and/or the connecting pipe 19 may extend along the support legs 20 and enter the inside of the extraction part 30. In this case, the portion of the power line 18 and/or the connecting pipe 19 passing through the support legs 20 may not be exposed to the outside.

An insulating layer (not shown) may be formed to surround the connecting pipe 19 to maintain the temperature of water passing through the connecting pipe 19. The connecting pipe 19 may have a predetermined length and flexibility to absorb changes in a distance between the base 10 and the extraction part 30. The insulating layer may be made of multiple layers as long as the ductility of the connecting pipe 19 is not impaired.

The support legs 20 may be installed on the base top plate 14. The support legs 20 may serve to support the extraction part 30. The support legs 20 generate the movement of the extraction part 30. The support legs 20 adjust the height of the extraction part 30. The support legs 20 may adjust the installation state of the extraction part 30, for example, the inclination thereof.

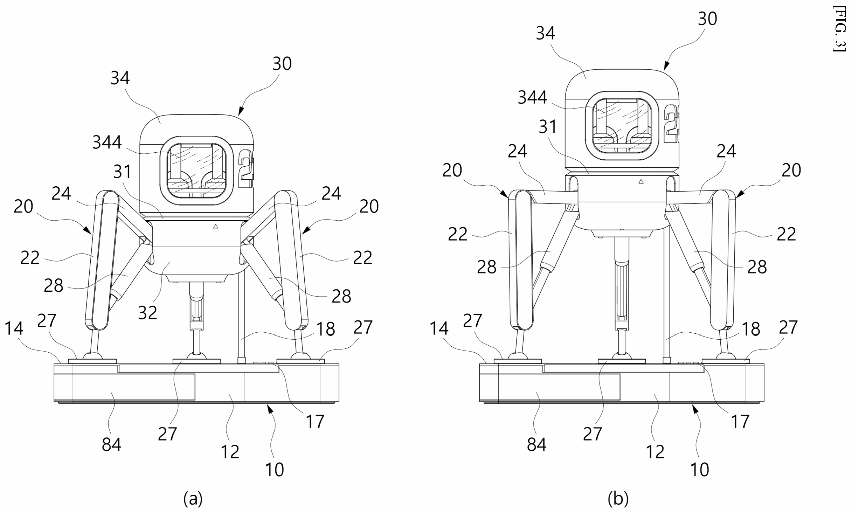

FIG. 3 shows states in which the height of the extraction part 30 is changed by the support legs 20. FIG. 3(a) shows a state in which the extraction part 30 is adjacent to the base 10, and FIG. 3(b) shows a state in which the extraction part 30 is relatively away from the base 10, that is, at a relatively elevated position.

In the illustrated embodiment, three of the support legs 20 are used. The three support legs 20 may be arranged at predetermined angular intervals along the perimeter of the extraction part 30. For example, the three support legs 20 may be placed at equal angular intervals from each other. The number of support legs 20 may vary depending on the size of the extraction part 30 and the operating pattern of the extraction part 30.

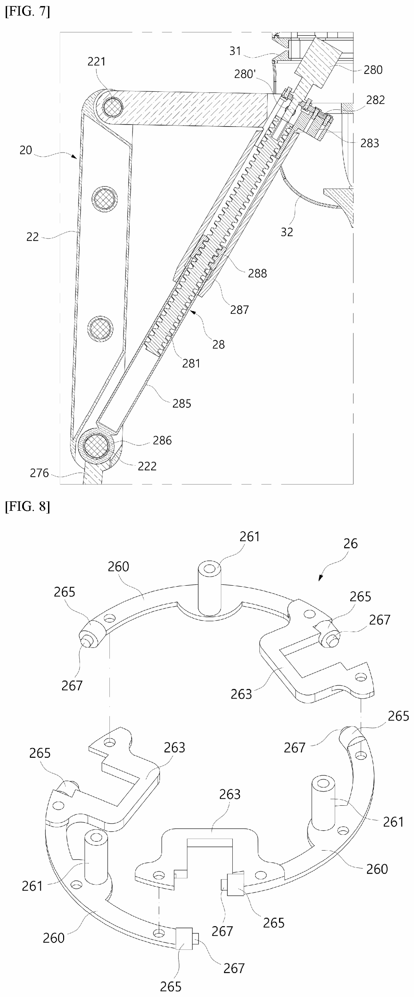

Each of the support leg 20 may include a support link 22 and a connecting link 24. The support leg 20 may have a first side connected to the base 10 and have a second side connected to the extraction part 30 through the connecting link 24. The support link 22 and the connecting link 24 are connected to each other to be rotatable relatively to each other through a link pin 221 (see FIG. 7). The connecting link 24 may have a first side connected to the support link 22 and have a second side connected to the extraction part 30, wherein the second side may be connected rotatably relatively to a connection frame 26 inside the extraction part 30.

The connection frame 26 is approximately ring-shaped overall. The connection frame 26 may be formed into a ring shape by coupling multiple divided frame bodies 260 to each other. In this embodiment, as illustrated in FIG. 8, three pieces of the frame bodies 260 are coupled to each other to form the ring-shaped connection frame 26. The connection frame 26 may have fixing bosses 261 to be fixed to the frame 31 to be described below. The multiple fixing bosses 261 may be provided on the connection frame 26 so that the entire ring-shaped connection frame 26 may be securely fixed to the frame 31.

The connection frame 26 may include leg connection parts 263. Each of the support legs 20 may be connected rotatably relatively to each of the leg connection parts 263 so as to be able to rotate relative to each other. More precisely, the connecting link 24 and the leg drive unit 28 to be described below may be connected to the leg connection part 263 so as to be rotatable relatively simultaneously. The leg connection part 263 has a shape recessed inward from the outside of the connection frame 26, which is ring-shaped.

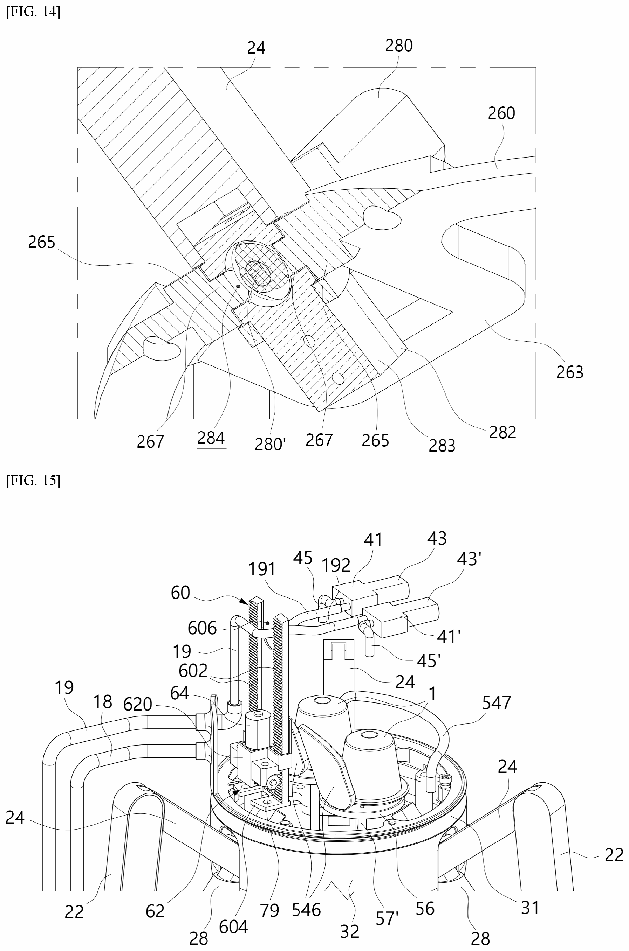

First rotation center pins 265 protrude to face each other on the inner opposite sides of the leg connection part 263, respectively. The first rotation center pins 265 may be the rotation center of the connecting link 24 and the leg drive unit 28. There may be second rotation center pins 267 concentric with the first rotation center pins 265 (see FIGS. 8 and 14). The second rotation center pins 267 may be the rotation center of the leg drive unit 28, which will be described below.

Each of the frame bodies 260 is coupled to an end of one side of the leg connection part 263. The first rotation center pins 265 are located on the frame bodies 260 which are separated from each other, and when these frame bodies 260 are coupled to each other, the first rotation center pins 265 face each other. In this way, when the frame bodies 260 are formed to be divided as many as the number of support legs 20, the frame bodies 260 and the support legs 20 may be sequentially coupled when assembling the entire apparatus. That is, one of the frame bodies 260 is installed on the frame 31, the support leg 20 and the leg drive unit 28 are assembled, and then another frame body 260 is assembled. Next, when the remaining one frame body 260 and the remaining two support legs 20 and the leg drive units 28 are assembled at the same time, the assembly of the connection frame 26 and the support legs 20 and the leg drive units 28 may be facilitated.

An inclination sensor 269 may be installed on one side of the connection frame 26. The inclination sensor 269 may detect the inclination of the connection frame 26, or in other words, the inclination of the extraction part 30.

There may be a joint 27 supported on the base 10 at a side opposite to a side at which the support link 22 is connected to the connecting link 24. The support link 22 may be rotated by a predetermined angle with respect to the base 10 by the joint 27. The joint 27 may be regarded as a kind of universal joint. The joint 27 includes a socket base 270. The socket base 270 may be fixed to the base top plate 14. There may be a socket 272 with a predetermined space formed inside on the socket base 270. A ball 274 can be positioned in the space inside the socket 272. The diameter of the ball 274 may have a dimension larger than the width of the entrance of the space formed in the socket 272. The ball 274 may be rotated in various directions within the socket 272. A connecting bar 276 is integral to the ball 275. The connecting bar 276 is connected to the support link 22. Here, the rotational trajectory of the connecting bar 276 may be determined by the shape of the entrance of the socket 272. In the illustrated embodiment, the entrance of the socket 272 is formed in a long slot shape in one direction, so that the connecting bar 276 may reciprocate in the longitudinal direction of the slot.

According to this configuration, the support link 22 may be operated to stand upright or be inclined at a predetermined angle with respect to the base 10 by the joint 27. Of course, the support link 22 may be operated in more diverse ways by changing the shape of the entrance of the socket 272.

Adjusting a connection angle between the support link 22 and the connecting link 24, which constitute the support legs 20, may be performed by the leg drive unit 28. The leg drive unit 28 has a first side connected rotatably relatively to the support link 22 by a link pin 222 (see FIG. 7), and has a second side connected rotatably relatively to the connecting link 24 and the connection frame 26. Here, the leg drive unit 28 may be length-variable so that a side of the leg drive unit 28 connected to the support link 22 and a side of the leg drive unit 28 connected to the connecting link 24 may move closer to each other or further apart from each other. As the length of the leg drive unit 28 changes, the connection angle between the support link 22 and the connecting link 24 changes. In this way, the position of the connection frame 26 may be moved by changing the connection angle between the support link 22 and the connecting link 24, and the connection frame 26 may be connected to the frame 31 of the extraction part 30, so that the position of the extraction part 30 may be moved.

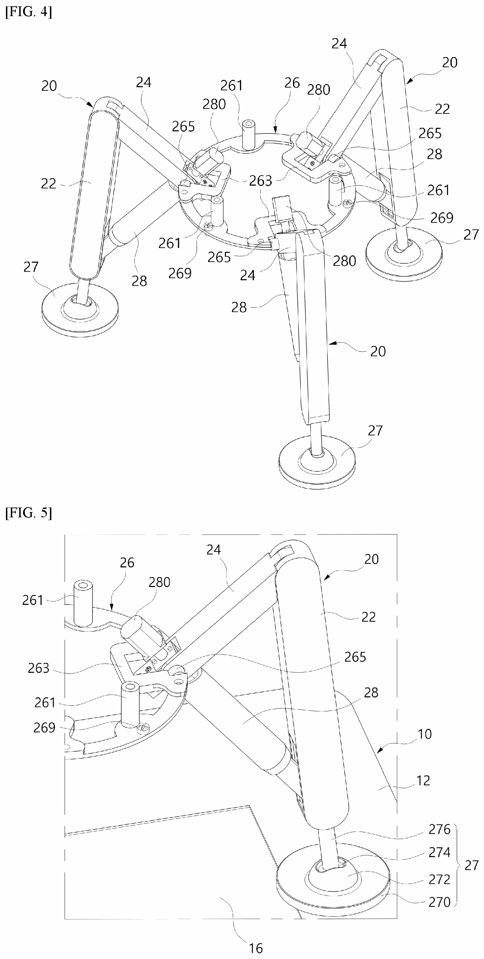

As is seen in FIG. 4, in the illustrated embodiment, there are three support legs 20, and when the lengths of the leg drive units 28 of the support legs 20 are equally increased and decreased, the connection angles of the support links 22 and the connecting links 24 change equally, and accordingly, the connection frame 26 may be raised and lowered to be level as a whole.

As is be seen in FIGS. 1 and 2, the support legs 20 are installed adjacently to the opposite edges of the front side of the base 10, respectively. Since the support legs 20 are provided on the opposite edges of the front side of the base 10, a cup may enter the center of the upper surface of the base 10 between the support legs 20 at the front end of the base 10, that is, into a position corresponding to the lower side of the extraction part 30. In particular, the two support legs 20 at the front end of the base 10 may be located as far as possible from each other at the front end of the base 10 so that the cup may easily pass therebetween, and a user may intuitively pass and position the cup.

In addition, as illustrated in FIG. 2, the width w of the extraction part 30 is smaller than a width W between the support legs 20 connected respectively to the opposite edges of the front end of the base 10. Additionally, in the illustrated embodiment, when multiple support legs 20 , i.e., three support legs 20 form an imaginary circle connecting portions thereof connected to the base 10, the extraction part 30 may be supported and moved up and down by being positioned in the inner region of the imaginary circle. Accordingly, the extraction part 30 may be supported and moved up and down more stably by the multiple support legs 20.

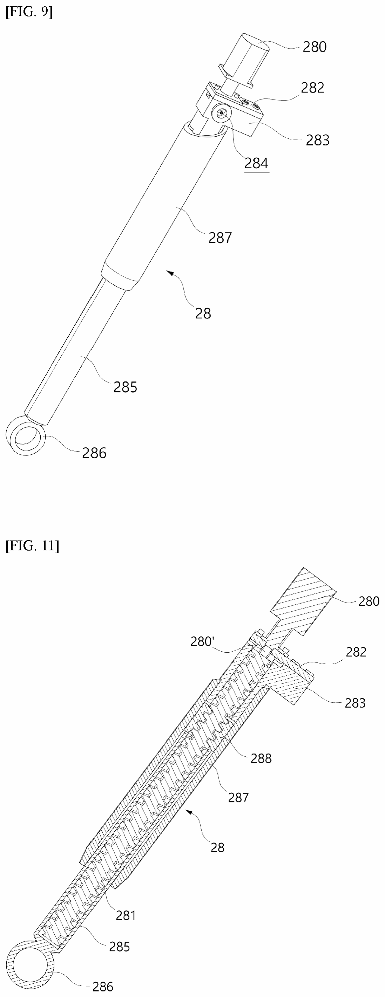

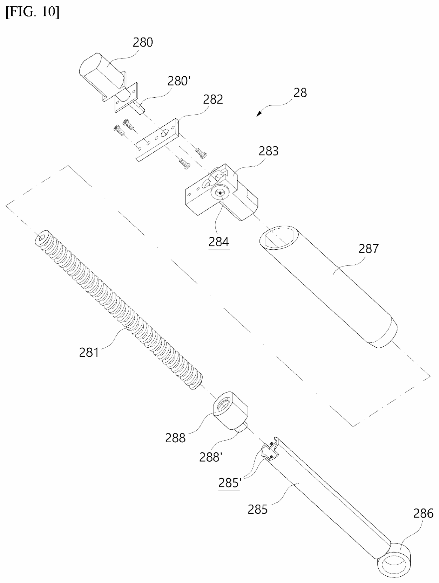

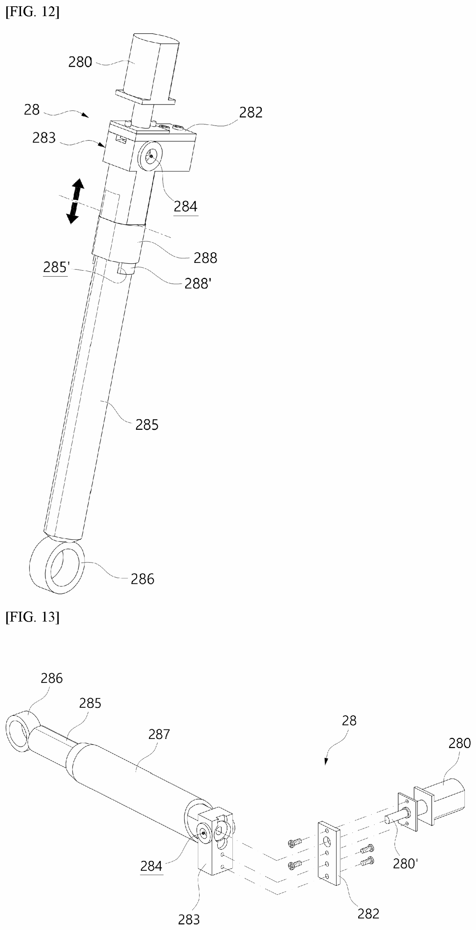

The configuration of the leg drive unit 28 will be described with reference to FIGS. 9 to 13. As described above, by changing the length of the leg drive unit 28 to change the connection angle between the support link 22 and the connecting link 24, the movement of the connection frame 26 is performed.

Accordingly, the leg drive unit 28 may be of any configuration as long as the relative positions of the opposite ends of the leg drive unit 28 changes to change the length thereof. For example, as another example of the leg drive unit 28, a configuration in which a piston rod is moved in and out of a cylinder by moving a piston within the cylinder may be used. Alternatively, a configuration in which the rectilinear motion of rack gears is used by interlocking of the rack gears and pinion gears may be used.

Looking at the configuration of the leg drive unit 28 used in the illustrated embodiment, there is a first drive source 280. The first drive source 280 may provide driving force to vary the length of the support leg 20. The first drive source 280 has a rotation shaft 280' which provides rotational force to the outside. The rotation shaft 280' extends outward from the first drive source 280. A lead screw 281 may be connected to the rotation shaft 280'. The lead screw 281 may be rotated together with the rotation shaft 280'.

The first drive source 280 may be installed in a bracket 282. The bracket 282 is intended to fix the first drive source 280. The rotation shaft 280' passes through the bracket 282. There may be a fixing frame 283 to which the bracket 282 is fixed. The fixing frame 283 is separate from the bracket 282 and is coupled to each other during assembly. The rotation shaft 280' passes through the fixing frame 283. Accordingly, by installing the fixing frame 283 and the bracket 282, which are in a combined state, on the connection frame 26, the first drive source 280 may be installed on the connection frame 26.

The fixing frame 283 is a structure for mounting the first drive source 280 and is positioned at a side of the lead screw 281 rotated by the first drive source 280. That is, the lead screw 281, which is rotated by the first drive source 280, passes through the fixing frame 283 and the bracket 282. Accordingly, since the component for mounting the first drive source 280 and the component operated by the first drive source 280 are in the same space, a space at the opposite side of the space relative to the first drive source 280 may be used freely.

The lead screw 281 may be rotated together with the rotation shaft 280'. There may be an inner member 285 to surround the lead screw 281. The inner member 285 may have a cylindrical shape and have the lead screw 281 positioned therein. The outer diameter of the lead screw 281 may be equal to or slightly smaller than the inner diameter of the inner member 285. There may be a connecting ring 286 on one side of the inner member 285. The connecting ring 286 may be connected rotatably relatively to one side of the support link 22. The connecting ring 286 may be connected rotatably relatively to the connecting bar 276 of the joint 27 in the support link 22.

An outer member 287 may be provided to surround the inner member 285. The inner member 285 and the outer member 287 may move longitudinally relatively to each other. Accordingly, relative to the inner member 285, the outer member 287 may move relatively so that the entire length of the leg drive unit 28 may be varied.

To perform this operation, there is a linkage block 288 which is coupled to the inner member 275 and interlocks with the lead screw 281. The inner surface of the linkage block 288 has a screw portion that interlocks with a screw portion of the lead screw 281. The linkage block 288 may be coupled to the inner member 285 so as not to be rotated or moved. For this purpose, the linkage block 288 may have a connection key 288' protruding therefrom, and the inner member 285 may have a connection key groove 285'. The connection key 288' and the connection key groove 285' may be in opposite positions. For example, the connection key groove may be formed in the linkage block 288 and the connection key may be formed in the inner member 285.

Accordingly, when the lead screw 281 is rotated by the first drive source 280, the lead screw 261 is rotated relative to the linkage block 288, and the linkage block 288 is fixed so as not to be rotated by the inner member 285, so that the lead screw 261 may move longitudinally relative to the linkage block 288. The movement of the lead screw 261 may generate the movement of the first drive source 280 via the rotation shaft 280' to which the lead screw 261 is coupled. The movement of the first drive source 280 may generate the movements of the bracket 282, the fixing frame 283, and the outer member 287 connected to the fixing frame 283. The movements of the first drive source 280 and the fixing frame 283 may generate the movement of the connection frame 26.

The extraction part 30 may be supported by the support legs 20. In the extraction part 30, a beverage may be extracted by injecting water into the capsule 1. The frame 31, a housing 32, and the cover 34 may form the exterior and frame of the extraction part 30.

The frame 31 may be made in a circular shape. Components to be described below may be mounted on the frame 31. The housing 32 may be mounted on the lower portion of the frame 31. The housing 32 may be approximately cylindrical in shape. The interior of the housing 32 may have components through which an extracted beverage is delivered.

On the frame 31, there is the cover 34 on a side opposite to the housing 32. The cover 34 may move up and down relative to the frame 31. In the illustrated embodiment, the housing 32 and the cover 34 are formed in cylindrical shapes. However, the housing 32 and the cover 34 may have various shapes, such as a polygonal prism shape.

First and second discharge pipes 57 and 57' to be described below may be located inside the housing 32. The housing 32 is mounted to the frame 31, and the connection frame 26 fixed to the frame 31 is supported by the support legs 20, so that the housing 32 may be substantially supported by the support legs 20.

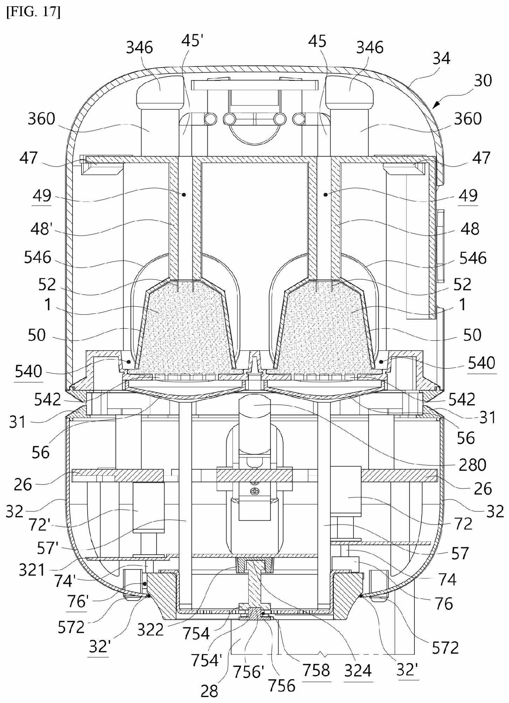

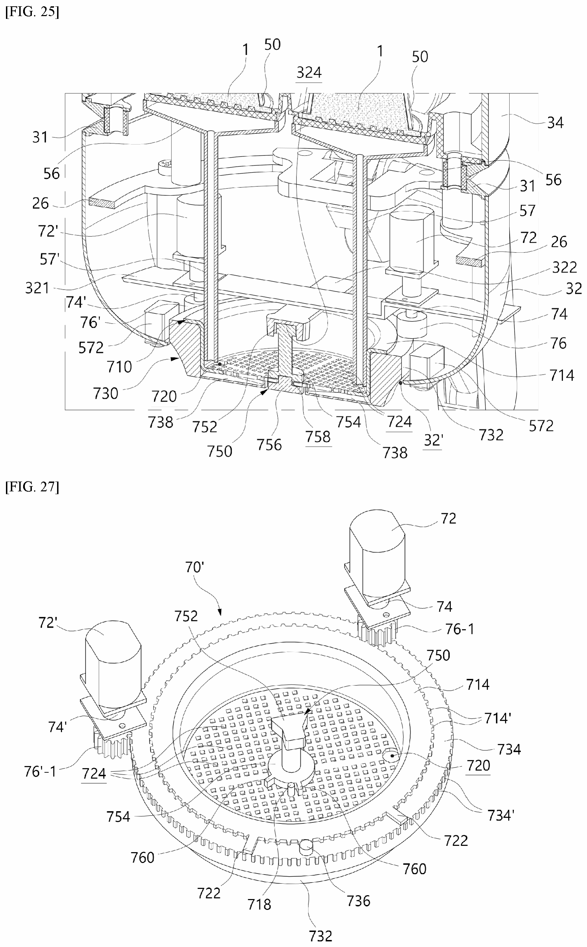

As illustrated in FIGS. 17 and 25, the housing 32 may be equipped with a first support beam 321 and a second support beam 322. The first support beam 321 and the second support beam 322 are positioned across the interior of the housing 32, and ends thereof may be fixed to the inner surface of the housing 32. The first support beam 321 and the second support beam 322 may intersect each other. A residual water tray assembly 70 and components related thereto to be described below may be installed on the first support beam 321 and the second support beam 322. The first support beam 321 and the second support beam 322 may be formed to have a step therebetween so that heights thereof are different depending on locations thereof.

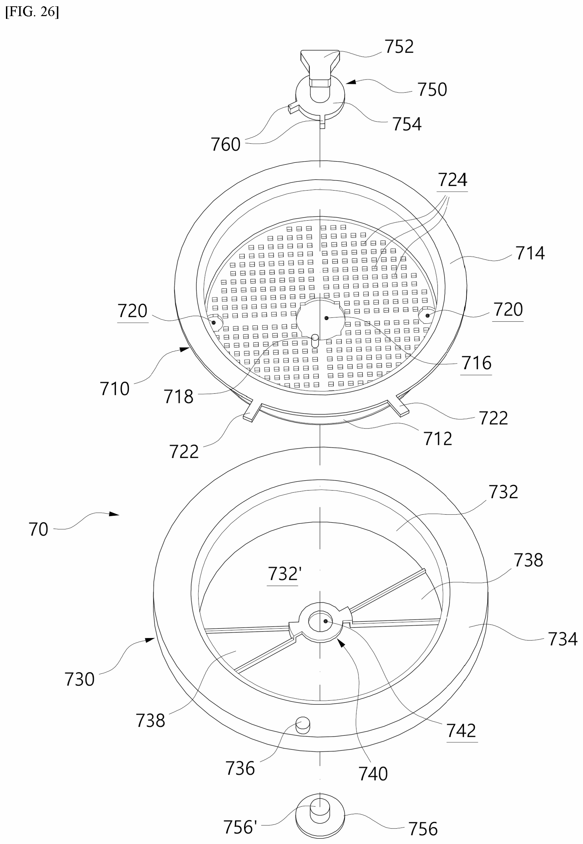

A mounting groove 324 may be formed on one side of the second support beam 322. A mounting part 752 of the residual water tray assembly 70 to be described below may be inserted into and mounted in the mounting groove 324. The shape of the mounting groove 324 may correspond to the shape of the mounting part 752, and a direction in which the mounting part 752 is mounted may be a specific direction. For example, the mounting groove 324 may be shaped to be directional. That is, the shape of the mounting groove 324 is made so that the mounting groove 324 does not have a circular or square cross-section. FIG. 26 illustrates the mounting part 752 having a shape corresponding to the mounting groove 324.

The cover 34 may be seated on the frame 31 together with components provided therein, and may be separated from the frame 31 by a predetermined distance by operation of a second drive source 64. The cover 34 may be moved upward relative to the frame 31 as shown in the drawing. When the cover 34 moves upward, a capsule seat 54 to be described below is exposed, and thus the capsule 1 may be positioned in a capsule sitting space 540.

The cover 34 may include a cover side wall 340 having the shape of a tube perforated up and down and a cover top plate 342 constituting an upper portion of the cover side wall 340. The cover side wall 340 and the cover top plate 342 are integral. However, the cover side wall 340 and the cover top plate 342 may be made separately and then combined. On one side of the cover side wall 340 there may be a window 344. The window 344 may be made of a transparent material, allowing the inside to be seen from the outside.

Inside the cover 34, more specifically, on an inner ceiling thereof, there may be cover bosses 346. The cover bosses 346 are used to fix a fixing plate 36 to be described below. The cover top plate 342 may have a touch sensor 348. The touch sensor 348 detects the touching of the finger of a user. The touch sensor 348 may be located in various locations other than the cover top plate 342. The touch sensor 348 may be used by a user to input a signal to operate the cover 34.

The fixing plate 36 may be installed inside the cover 34. The above fixing plate 36 may have a shape corresponding to the cross-sectional shape of the cover side wall 340 of the cover 34. In the illustrated embodiment, the fixing plate 36 has a disc shape. The fixing plate 36 may have fixing bosses 360 coupled to the cover bosses 346. The fixing bosses 360 may be provided in the corresponding number thereof at positions corresponding to positions of the cover bosses 346.

There may be a moving guide 38 extending from one side of the fixing plate 36. The moving guide 38 may be moved by being guided by a fixed guide 58 to be described below. The moving guide 38 may be moved up and down inside the fixed guide 58. A component for the lifting and lowering of the cover 34 may be positioned in the space formed inside the moving guide 38.

A first branch pipe 191 and a second branch pipe 192 branched from the connecting pipe 19 may be positioned on the fixing plate 36. A first valve 41 and a first pump 43 may be installed to be connected to the first branch pipe 191, and a second valve 41' and a second pump 43' may be installed to be connected to the second branch pipe 192. The first valve 41 and the first pump 43, the second valve 41' and the second pump 43' may be seated on the fixing plate 36.

A first supply pipe 45 may be installed to be connected to the first pump 43. A first cap connecting pipe 48, which will be described below, may be connected to the first supply pipe 45. A second supply pipe 45' may be connected to the second pump 43'. A second cap connecting pipe 48', which will be described below, may be connected to the second supply pipe 45'.

Here, the first valve 41 may control the flow of water from the first branch pipe 191 to the first supply pipe 45. The second valve 41' connected to the second branch pipe 32 may control the flow of water from the second branch pipe 192 to the second supply pipe 45'. The first pump 43 and the second pump 43' may provide driving force for the flow of water to the first supply pipe 45 and the second supply pipe 45', respectively.

Here, to ensure that water is supplied through both the first supply pipe 45 and the second supply pipe 45', the first pump 43 is driven to open the first valve 41, and the second pump 43' is also driven to open the second valve 41'. When water is supplied only through the first supply pipe 45, the first pump 43 is driven to open the first valve 41, and the second pump 43' is not driven to close the second valve 41'.

Multiple light sources 47 may be installed around the edge of the fixing plate 36. The light sources 47 may express a beverage extraction process with light. For example, the light sources 47 may emit light during the process of extracting a beverage from the capsule 1. As the light sources 47, LEDs may be used.

Meanwhile, there may be the first cap connecting pipe 48 and the second cap connecting pipe 48' extending downward from the fixing plate 36. There may be a connection flow path 49 inside each of the first cap connecting pipe 48 and the second cap connecting pipe 48'. Water delivered through each of the supply pipes 45 and 45' may be supplied through the connection flow path 49.

Caps 50 may be provided on ends of the first cap connecting pipe 48 and the second cap connecting pipe 48', respectively. Each of the caps 50 may be manufactured separately from the first cap connecting pipe 48 or the second cap connecting pipe 48' to be coupled thereto. The cap 50 presses and fixes the capsule 1. The shape of the cap 50 may vary depending on the type of the capsule 1.

When the cap 50 descends in the direction of gravity, the cap 50 surrounds the capsule 1 seated in the capsule sitting space 540 to be described below. While a beverage is extracted from the capsule 1, the cap 50 surrounds the capsule 1 and prevents the capsule 1 from being exposed to the outside. Accordingly, when the cap 50 moves rectilinearly in a direction opposite to gravity after a beverage is extracted, the capsule 1 from which the beverage is extracted may be exposed to the outside.

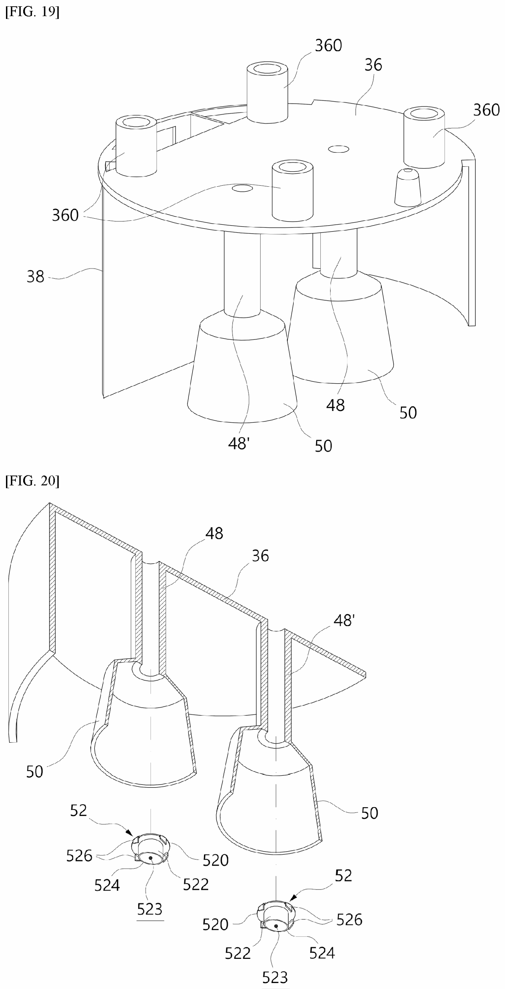

The cap 50 may have a perforator 52. The perforator 52 may be installed by being connected to the connection flow path 49. The perforator 52 may be installed at the outlet of the connection flow path 49, as is seen in FIG. 20.

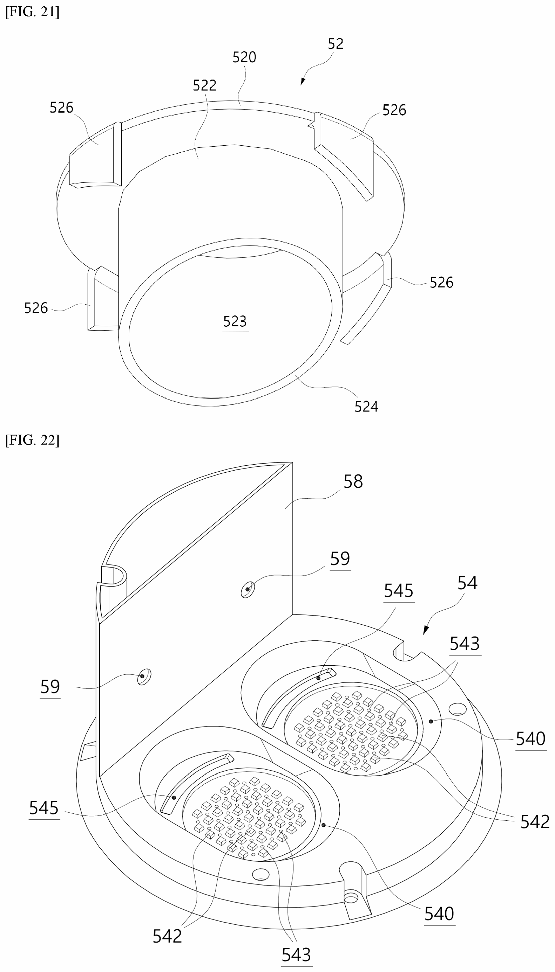

The structure of the perforator 52 is well illustrated in FIG. 21. The perforator 52 forms a through-hole through which water may be injected into the capsule 1. The perforator 52 may be made of a material capable of penetrating the corresponding portion of the capsule 1. For example, the perforator 52 may be made of metal.

The perforator 52 includes a body plate 520. The body plate 520 is a ring-shaped plate. A flow path pipe 522 protrudes from the body plate 520. Water supplied through the supply pipes 45 and 45' may flow through the flow path pipe 522. An injection flow path 523 may be formed inside the flow path pipe 522. A perforation blade 524 may be formed on the end of the flow path pipe 522. The perforation blade 524 may have an elliptical shape overall. This is because the end of the flow path pipe 522 is formed to be inclined to form the perforation blade 524. Accordingly, the length of the flow path pipe 522 gradually increases from a first side to a second side by starting from the body plate 520 and then gradually decreases from the second side to the first side.

The body plate 520 may include multiple fixing pieces 526. The fixing pieces 526 may be spaced at predetermined angular intervals on the edge of the body plate 520. Each of the fixing pieces 528 may be inserted into a corresponding part of the capsule 1 by pressing or penetrating the corresponding part of the capsule 1 to fix the capsule 1 when the capsule 1 is mounted in the capsule sitting space 540 and the cap 50 presses the capsule 1. The tip of the fixing piece 528 may be formed to be inclined. One side of the fixing piece 528 may have a sharp shape. The fixing piece 528 may serve to fix the capsule 1.

FIG. 22 illustrates the capsule seat 54. The capsule seat 54 may be installed on the frame 31. The capsule seat 54 may include multiple capsule sitting spaces 540 formed therein. In the illustrated embodiment, two capsule sitting spaces 540 are formed. Multiple protrusions 542 are arranged in rows on the bottom of each of the capsule sitting spaces 540. Discharge holes 543 through which an extracted beverage passes are formed to be adjacent to the protrusions 542. The multiple discharge holes 543 may be formed in rows.

A capsule detection part 59 may detect that the capsule 1 is seated in the capsule sitting space 540. The capsule detection part 59 may be installed on the fixed guide 58. For example, the capsule detection part 59 may be configured as an ultrasonic sensor, a laser sensor, a camera, etc., and any module or device capable of detecting the capsule 1 may be applied. In order not to interfere with the detection operation of the capsule detection part 59, a guide plate 546 (see FIG. 15) to be described below may be made of a transparent material.

An installation slot 545 may be formed by surrounding one side of the capsule sitting space 540. The installation slot 545 may be formed by penetrating the capsule seat 54 through the bottom of the capsule sitting space 540. The installation slot 545 may have a predetermined radius of curvature. The guide plate 546 may be installed in the installation slot 545. The guide plate 546 may guide the capsule 1 to the capsule sitting space 540. On the opposite side of the guide plate 546, a guard 547 (see FIG. 15) may be installed. The guard 547 surrounds the front part of the capsule sitting space 540. The guard 547 may partition an area in which the capsule 1 is installed from other areas and prevent external force from randomly acting on the capsule 1. However, the guard 547 is not necessarily required.

As is seen in FIG. 17, hoppers 56 may be installed on the lower part of the capsule seat 54. Each of the hoppers 56 collects a beverage that has passed through the discharge holes 543. The hoppers 56 may be located in corresponding positions of the capsule sitting spaces 40. The hoppers 56 have the discharge pipes 57 and 57', respectively. The first discharge pipe 57 is a place through which a beverage extracted by water supplied through the first supply pipe 45 flows, and the second discharge pipe 57' is a place through which a beverage extracted by water supplied through the second supply pipe 45' flows. The beverage that passes through the first discharge pipe 57 and the second discharge pipe 57 may be delivered to a cup.

At the ends of the first discharge pipe 57 and the second discharge pipe 57', there may be provided the residual water tray assembly 70 to be described below. Particularly, the first discharge pipe 57 and the second discharge pipe 57' may selectively communicate with the extraction through-holes 720 at positions corresponding to extraction through-holes 720 formed in a first base 710 of the residual water tray assembly 70.

Meanwhile, as is seen in FIF. 24, a distance sensor 572 may be installed on the outer surface of the housing 32 adjacent to the opening part 32' of the housing 32. The distance sensor 572 may measure a distance to a cup located below the extraction part 30.

As another example, the residual water tray assembly 70 may not be used. The first discharge pipe 57 and the second discharge pipe 57' may directly pass through the housing 32 without the opening part 32'. In the case in which the opening part 32' is present in the housing 32, there may be a separate shielding plate (not shown) to shield the opening part 32'. The first discharge pipe 57 and the second discharge pipe 57' may penetrate the shielding plate.

The first discharge pipe 57 and the second discharge pipe 57' may pass through the shielding plate so that outlets thereof are exposed to the outside. Alternatively, the first discharge pipe 57 and the second discharge pipe 57' may not penetrate the shielding plate and the outlets thereof may not be exposed to the outside, and multiple through-holes may be formed in the shielding plate to allow an extracted beverage to be discharged to the outside.

The first discharge pipe 57 and the second discharge pipe 57' may extend through the lower portion of the housing 32 toward a cup. The outlets of the first discharge pipe 57 and the second discharge pipe 57' may be spaced apart from each other at a predetermined distance. The distance between the outlets of the first discharge pipe 57 and the second discharge pipe 57' may be a distance to deliver a beverage to one cup at the same time. That is, the distance between the outlets of the first discharge pipe 57 and the second discharge pipe 57' may be set to a distance smaller than the diameter of the inlet of a typical cup. This is to enable a beverage from the first discharge pipe 57 and the second discharge pipe 57' to be received simultaneously in one cup.

In addition, a distance between the outlets of the first discharge pipe 57 and the second discharge pipe 57' is required to have a value greater than twice the thickness of a wall of a cup. With this structure, beverages coming out of the first discharge pipe 57 and the second discharge pipe 57 may be received in separate cups.

As illustrated in FIG. 22, the fixed guide 58 protrudes from the capsule seat 54. The fixed guide 58 may be formed upright on the surface of the capsule seat 54. A predetermined space may be formed inside the fixed guide 58 by vertically penetrating the fixed guide 58, and the moving guide 38 may be movably positioned in the space inside the fixed guide 58.

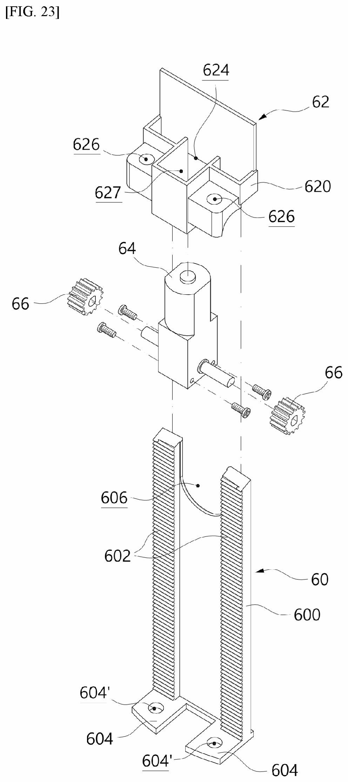

A movement guide structure 60 may be installed on the frame 31 or within the fixed guide 58 of the capsule seat 54. The movement guide structure 60 may serve to guide the movement of a moving component 62 to be described below. The configuration of the movement guide structure 60 is well illustrated in FIG. 23. The movement guide structure 60 may be installed on the frame 31 and may extend long in one direction inside the fixed guide 58.

The frame of the movement guide structure 60 may be constituted by a guide structure body 600. Rack gears 602 may be formed along one side surface of the guide structure body 600. The rack gears 602 may be formed in multiple columns extending in the height direction of the guide structure body 600. In this embodiment, the rack gears 602 are formed in two columns side by side along the guide structure body 600.

Fixing pieces 604 may be provided on the lower portion of the movement guide structure 60. The fixing pieces 604 are parts that are coupled to the frame 31. Each of the fixing pieces 604 may have the fixing hole 604' formed therein. The fixing hole 604' may have a fastening hole formed therethrough to be fastened to the frame 31.

The movement guide structure 60 may have a pipe interference avoidance part 606 formed through the upper portion thereof to avoid interference with the connecting pipe 19 or the power line 18. By providing the pipe interference avoidance part 606, the movements of the width directions of the branch pipes 191 and 192 and the connecting pipe 19 may be prevented.

As illustrated in FIG. 23, there may be the moving component 62 that moves along the movement guide structure 60. The moving component 62 may be coupled to the cover 34, so that the cover 34 and internal parts thereof may be moved by the movement of the moving component 62. The moving component 62 may move toward and away from the frame 31 along the movement guide structure 60. In this embodiment, the moving component 62 may be moved up and down along the movement guide structure 60 with respect to the frame 31.

A moving component body 620 may constitute a frame of the moving component 62. The moving component body 620 has a penetration part 624 formed through the moving component body 620 in a vertical direction. The movement guide structure 60 may pass through the penetration part 624. The moving component body 620 may be connected to one side of the moving guide 38 of the fixing plate 36. The moving component body 620 may have connection holes 626 to be connected to the moving guide 38. The moving component body 620 does not necessarily have to be connected to the moving guide 38 by using the connection holes 626, and may be connected to the moving guide 38 at any point at which the moving component body 620 and the moving guide 38 are in contact with each other.

A drive source mounting part 627 may be formed in the moving component body 620. The second drive source 64, which provides driving force for movement of the moving component 62, may be installed in the drive source mounting part 627. A geared motor may be used as the second drive source 64. Drive gears 66, which is rotated by the driving force of the second drive source 64, may be positioned on opposite sides of the moving component body 620. The drive gears 66 are coupled rotatably to the second drive source 64 and operate in cooperation with the rack gears 602, respectively. The guide structure body 600 on which each of the rack gears 602 is formed is fixed on the frame 31, and thus the drive gears 66, which rotate in mesh with the rack gears 602, may be raised and lowered along the rack gears 602. The cover 34 may be moved by the drive gears 66 being raised and lowered along the rack gears 602.

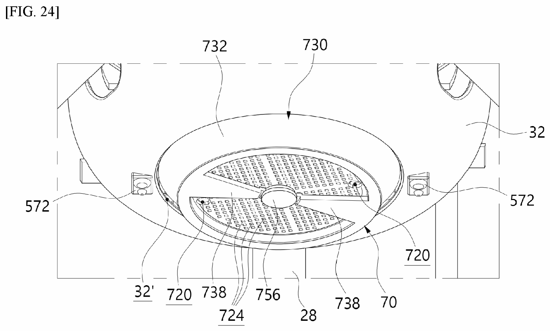

As illustrated in FIG. 24, in the embodiment of the present disclosure, the opening part 32' may be formed at the lower portion of the housing 32. The opening part 32' may be seen even in FIG. 17. The residual water tray assembly 70 may be installed on the opening part 32'. The residual water tray assembly 70 may collect residual water coming out after beverage extraction. Beverages passing through the tray assembly 70 after passing through the first discharge pipe 57 and the second discharge pipe 57 may be delivered to a cup. To this end, the residual water tray assembly 70 may have a first tray 710 to be described below which has the extraction through-holes 720 formed by penetrating the first tray 710.

The residual water tray assembly 70 may include the first tray 710, a second tray 730, and the rotation center shaft 750. Configurations thereof are well illustrated in FIG. 26. The first tray 710 and the second tray 730 may be rotatably installed on the rotation center shaft 750. The first tray 710 may be rotatably seated on the second tray 730.

The first tray 710 may have a first tray body 712 constituting a frame thereof, and the first tray body 712 may have the shape of a flat cylinder open upward. A seating ring 714 may be formed to surround the upper edge of the first tray body 712. The seating ring 714 is a part that may be seated on the second tray 730. The seating ring 714 may be formed in a ring shape to protrude outward on the upper edge of the first tray body 712. The first tray 710 is configured so that the open upper portion thereof faces the interior of the housing 32. The first tray 710 is open in a direction opposite to that of gravity while installed in the opening part 32 of the housing 32. By doing this, residual water coming out of the discharge pipes 57 and 57' and condensate generated inside the extraction part 30 are prevented from leaking out of the extraction part 30. That is, the residual water is collected inside the first tray 710 through the open upper portion of the first tray 710. Of course, the residual water that passes through residual water holes 724 formed in the first tray 710, which will be described below, is collected in the residual water pools 738 of the second tray 730, which will be described below.

A rotation center hole 716 may be formed in the center of the bottom of the first tray body 712. The rotation center hole 716 may be the rotation center of the first tray 710 and one side of the rotation center shaft 750 may be located therein. A first holding protrusion 718 may be formed to protrude on the bottom of the first tray body 712 adjacent to the rotation center hole 716. The first holding protrusion 716 may be positioned between the pair of first stop protrusions 760 of the rotation center shaft 750, which will be described below, to regulate the rotation range of the first tray 710.

The extraction through-holes 720 may be formed in the first tray body 712. The extraction through-holes 720 may be formed through the bottom of the first tray body 712. Beverages delivered through the first discharge pipe 57 and the second discharge pipe 57' may pass through the extraction through-holes 720. Accordingly, the extraction through-holes 720 may be respectively formed at positions corresponding to the first discharge pipe 57 and the second discharge pipe 57'. In the illustrated embodiment, the extraction through-holes 720 are respectively formed at positions adjacent to the inner surface of the inner space, which is the edge of the bottom of the first tray 720. The extraction through-holes 720 may be formed at a 180-degree interval.

A pair of second stop protrusions 722 may be formed on one side of the seating ring 714. The second stop protrusions 722 are formed in two pieces with a predetermined distance therebetween. The second stop protrusions 722 may protrude by extending centrifugally from the seating ring 714.

The multiple residual water holes 724 may be formed on the bottom of the first tray 720. Each of the residual water holes 724 may have a size to prevent liquid from escaping. For example, the residual water hole 724 may have a rectangular shape with each of width and length having a value of approximately 1mm. The residual water hole 724 may be made to have a size to prevent the passage of even the smallest beverage droplets. Accordingly, the multiple residual water holes 724 may each hold a certain amount of beverage.

The second tray 730 may have the same rotation center as that of the first tray 710. The second tray 730 may also rotate about the rotation center shaft 750. As is seen in FIG. 26, a second tray body 732 may constitute the frame of the second tray 730. A seating space 732' may be formed by vertically penetrating the second tray body 732. The first tray body 712 of the first tray 710 may be positioned in the seating space 732'. In the illustrated embodiment, as is seen in FIG. 17 or 25, the first tray body 712 is located only inside the seating space 732' and does not protrude therefrom to the outside.

An outer ring 734 is integrated with the second tray body 732. The outer ring 734 may have an inner diameter equal to or slightly smaller than the outer diameter of the first tray body 712. The first tray body 712 may be positioned inside the outer ring 734, and the seating ring 714 of the first tray 710 may be seated on the outer ring 734. A second holding protrusion 736 may be provided on one side of the outer ring 734. The second holding protrusion 736 may protrude upward from the outer ring 734. The second holding protrusion 736 may be positioned between the pair of second stop protrusions 722 on the first tray 710 to regulate the rotation range of the second tray 730 with respect to the first tray 710.

The seating space 732' of the second tray body 732 may include the residual water pools 738. The residual water pools 738 may temporarily store a beverage discharged after remaining in the first discharge pipe 57 and the second discharge pipe 57' after beverage extraction. Of course, various moistures generated within the extraction part 30 may also be received by the residual water pools 738. The residual water pools 738 may include two residual water pools 738. This is to enable the residual water discharged from the first discharge pipe 57 and the second discharge pipe 57' to be received separately. In the illustrated embodiment, each of the residual water pools 738 is triangular in shape when viewed in a plan view. However, the residual water pool 738 may be made in various shapes having a volume to contain a certain amount of residual water.

A fixing piece 740 may be provided to connect the residual water pools 738 to each other. The fixing piece 740 supports the second tray 730 so that the second tray 730 is rotatable on the rotation center shaft 750. A fixing hole 742 may be formed in the fixing piece 740. A coupling pin 756' in a second coupling disk 756 of the rotation center shaft 750 to be described below may pass through the fixing hole 742.

The rotation center shaft 750 serves as the rotation center of the first tray 710 and the second tray 730, and at the same time, allows the first tray 710 and the second tray 730 to be installed in the housing 32. The mounting part 752 may be provided on one side of the rotation center shaft 750. The mounting part 752 may be located on the upper portion of the rotation center shaft 750. The mounting part 752 may be formed to be seated within the mounting groove 324. More specifically, the shape of the mounting part 752 may correspond to the shape of the mounting groove 324. This is to ensure that the mounting part 752 is installed directionally on the second support beam 322. Accordingly, a non-directional structure, such as a circular or square plate, may not be used for the shape of the mounting part 752.

The mounting part 752 may be formed as a magnet, and the second support beam 322 in which the mounting groove 324 is formed may be formed as a magnetic body so that the mounting part 752 may be attached to the mounting groove 324 by magnetic force. Alternatively, there may be a magnet in the mounting groove 324, and the mounting part 752 may be a magnetic body, so that the mounting part 752 may be mounted in the mounting groove 324 by magnetic force.

The rotation center shaft 750 may include a first coupling disk 754 and a second coupling disk 756. The second coupling disk 756 may be positioned with a predetermined gap 758 from the first coupling disk 754. The second coupling disk 756 may have the coupling pin 756' formed by protruding therefrom, and the first coupling disk 754 may have a coupling groove 754' formed to be concave. By this configuration, the coupling pin 756' may be press-fitted or screwed into the coupling groove 754'. For the screw coupling of the coupling pin 756' and the coupling groove 754', threads are required to be formed on the corresponding surfaces of the coupling pin 756' and the coupling groove 754'. The coupling pin 756' and the coupling groove 754' may be in opposite positions to those shown in the drawing. For example, the coupling pin 756' may be formed on the first coupling disk 754, and the coupling groove 754' may be formed in the second coupling disk 756.

The first coupling disk 754 may include the pair of first stop protrusions 760. The pair of first stop protrusions 760 may be movably positioned on the bottom of the first tray 710 and cooperate with the first holding protrusion 718 to regulate the range of the rotation of the first tray 710 about the rotation center shaft 750.

Meanwhile, power for the rotation of the first tray 710 may be provided by a first tray drive source 72 installed on the first support beam 321. A first drive roller 76 is installed on a rotation shaft 74 of the first tray drive source 72. The first drive roller 76 may be in close contact with the outer surface of the seating ring 714 of the first tray 710 and may rotate the first tray 710 by friction.

Power for the rotation of the second tray 730 may be provided by a second tray drive source 72' installed on the first support beam 321. A second drive roller 76' is installed on a rotation shaft 74' of the second tray drive source 72'. The second drive roller 76' may be in close contact with the outer surface of the outer ring 734 of the second tray 730 and may rotate the second tray 730 by friction.

In another embodiment, only one of the first tray drive source 72 and the second tray drive source 72' may be used. For example, only the second tray 730 may be configured to be rotatable. For this purpose, only the second tray drive source 72' may be used without using the first tray drive source 72. In this case, the second tray drive source 72' may rotate the second tray 730 so that the residual water pools 738 of the second tray 730 are selectively positioned at positions corresponding to the extraction through-holes 720 and at positions moved out of the positions of the extraction through-holes 720 so that a beverage is extracted into a cup through the extraction through-holes 720.

As another embodiment, the first tray 710 and the second tray 730 may be rotated directly by a user without being rotated by the separate drive sources 72 and 72'. For example, both the first tray 710 and the second tray 730 may be configured to be rotated directly by a user, or only the second tray 730 may be configured to be rotated directly by a user.

FIG. 27 shows another configuration of a residual water tray assembly 70'. Difference thereof from the residual water tray assembly 70 described above is that the first tray 710 and the second tray 730 are not driven by friction, but the first tray 710 and/or the second tray 730 is rotated by the cooperative operation of a first drive gear 76-1 and a seating ring gear 714' and by the cooperative operation of a second drive gear 76'-1 and an outer ring gear 734'. The first drive gear 76-1 is used instead of the first drive roller 76 described above, and the seating ring gear 714' is provided on the outer surface of the seating ring 714 of the first tray 710. The second drive gear 76'-1 is used instead of the second drive roller 76' described above, and the outer ring gear 734' is provided on the outer surface of the outer ring 734.

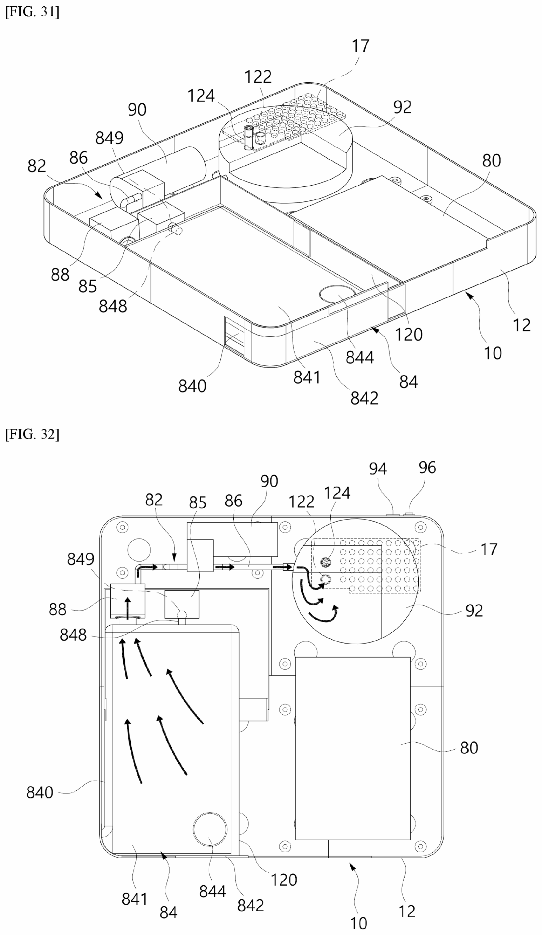

Next, referring to FIGS. 31 to 37, components inside the base 10 will be described. The controller 80 may be provided in the base 10. The controller 80 may perform control for the operation of the beverage apparatus and control of the display 16 in the base 10. The controller 80 may be a printed circuit board in which various elements are mounted and circuits are configured.

The water supply part 82 may be installed inside the base 10. The water supply part 82 supplies water used when extracting a beverage from the capsule 1. The water supply part 82 may include the water tank 84. The water tank 84 stores water needed to extract beverages. The water tank 84 may be separated from the base 10 and filled with water. However, in a case in which the beverage apparatus of the present disclosure is fixed, an external water supply source may be connected to the water tank 84. Alternatively, water may be supplied directly from an external water source without the water tank 84.

The water tank 84 may be located in a location separate from the controller 80. A partition wall 120 may be formed within the base body 12, and thus an area in which the water tank 84 is installed may be partitioned from the surrounding area by the partition wall 120. A water tank inlet/outlet 126 may be formed on one side surface of the base 10. The water tank 84 may be inserted and removed in a drawer-like manner into and out of the base 10 through the water tank inlet/outlet 126.

A water tank body 840 may constitute the frame of the water tank 84. The water tank body 840 may be an approximately flat hexahedron. A storage space 840' in which water is stored is formed inside the water tank body 840. A cover plate 841 may constitute the upper surface of the water tank body 840. Here, the upper surface constituted by the cover plate 841 is an outer surface with a relatively large area in the shape of a flat hexahedron. The cover plate 841 may shield the open entrance of the water tank body 840 to allow the storage space 840' to be easily opened and closed. Of course, the storage space 840' inside the water tank body 840 may be shielded from the outside without the cover plate 841. However, by placing the cover plate 841, the storage space 840' may be cleaned more easily. A seal (not shown) may be positioned on an edge of the cover plate 841 or a corresponding position of the water tank body 840 to block water leakage through the edge of the cover plate 841 and the corresponding position of the water tank body 840.

There may be a water tank door 842 on the outer surface of one side of the water tank body 840. The water tank door 842 may open and close the water tank inlet/outlet 126. The water tank door 842 may be made to have a wider area and a larger size than the outer surface of one side of the water tank body 840 to shield the water tank inlet/outlet 126.

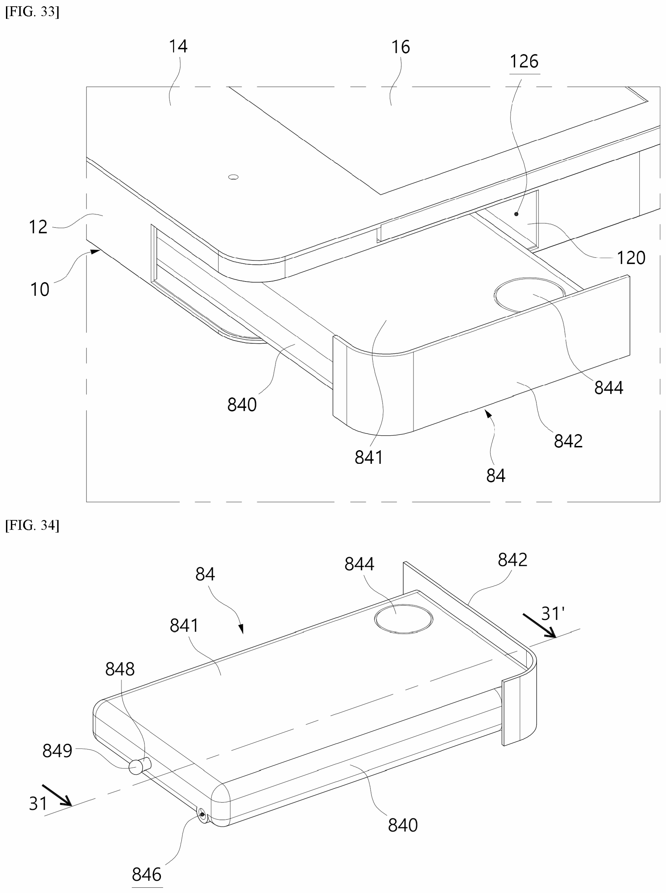

The water tank body 840 may have a water tank entrance 844. The water tank entrance 844 may be located on the cover plate 841. By opening the water tank entrance 844, water may be injected into the storage space 840'. Accordingly, as illustrated in FIG. 33, water may be injected into the storage space 840' through the water tank entrance 844 while a portion of the water tank 84 is protruded outside the base 10.

A discharge connection hole 846 may be located on one side of the water tank body 840. The discharge connection hole 846 may be located on the opposite outer surface of the water tank door 842. An internal pipe 86 to be described below may be coupled to the discharge connection hole 846.

Meanwhile, the bottom of the storage space 840' of the water tank 84 may be formed to be inclined downward from a first side thereof to a second side thereof. Here, it may be formed to be inclined downward toward the discharge connection hole 846. In this way, when the bottom of the storage space 840' is inclined downward toward the discharge connection hole 846, stored water may flow efficiently toward the discharge connection hole 846, and no water may remain on the bottom of the storage space 840'.

A coupling bar 848 may be provided on the rear portion of the water tank body 840. The free end of the coupling bar 848 may have a coupling ball 849. The coupling ball 849 has the shape of a ball having a diameter larger than that of the coupling bar 848. The coupling ball 849 operates in cooperation with a push-push-type locking/ejecting device 85. When the coupling ball 849 is inserted into the locking/ejecting device 85 and pushes an internal structure thereof, the coupling ball 849 is coupled to the locking/ejecting device 85. In this state, when the water tank 84 is again pushed in a direction in which the coupling ball 849 moves forward, the locking/ejecting device 85 releases the coupling state of the coupling ball 849 and pushes the coupling ball 849 in the opposite direction. By this operation, the water tank 84 may be easily attached to and detached from the interior of the base 10. The specific structure of the push-push-type locking/ejecting device 65 will be omitted for convenience.

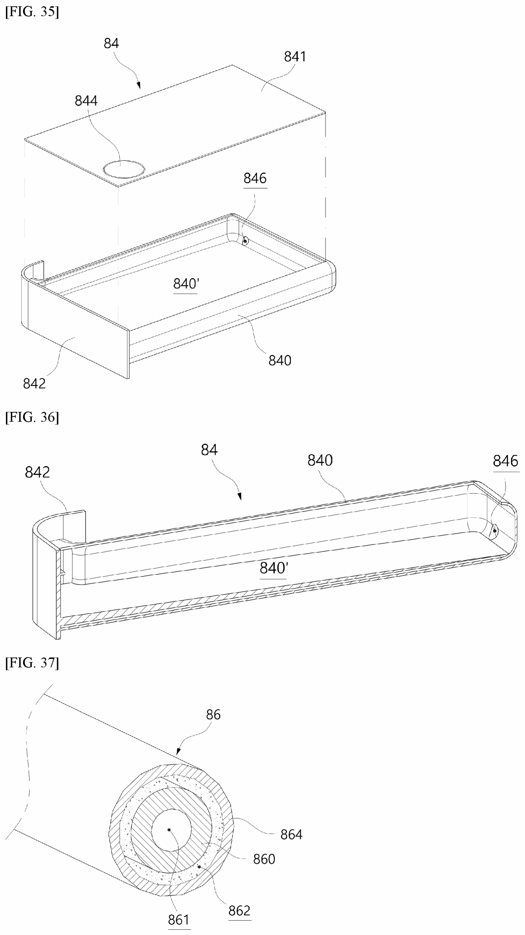

The internal pipe 86 may be coupled to the discharge connection hole 846 of the water tank 84. Through the internal pipe 86, water within the water tank 84 may flow within the base 10. As illustrated in FIG. 37, in the internal pipe 86, a flow path 861 through which water flows is formed inside an internal pipe body 860, and an insulating layer 862 is formed to surround the outer surface of the internal pipe body 860. Water flowing through the flow path 861 may be prevented from transferring heat to the outside by the insulating layer 862. An external pipe body 864 is provided to surround the insulating layer 862.

In other words, the internal pipe 86 may be a double pipe made up of the internal pipe body 860 and the external pipe body 864, and there may be an insulating layer 862 between the internal pipe body 860 and the external pipe body 864, so the loss of the heat of water to the outside may be prevented. In addition, even if a user comes into contact with the internal pipe 86, the user is not damaged by heat. For reference, the connecting pipe 19 may also have the same structure as the internal pipe 86.

A sensor 88 may be provided in the internal pipe 86 corresponding to the outlet of the water tank 84. The sensor 88 may measure the amount of water discharged from the water tank 84. A main pump 90 may be installed in the internal pipe 86 through which water flows through the sensor 88. The main pump 90 may provide motive power to cause the flow of water in the water tank 84. A small centrifugal pump may be used as the main pump 90.

The water supply part 82 has a boiler 92. The boiler 92 supplies heat to water passing through the main pump 90. The above boiler 92 has a heater such as a sheath heater or cartridge heater inside, and thus may heat the delivered water to a desired value. In the boiler 92, there may be various methods for heating water in addition to using a heater. For example, water may be heated by placing a heating device in a pipe, which is installed inside the boiler, through which water passes. The temperature of the water leaving boiler 92 may be set to a value desired by a user. For this purpose, the boiler 92 has a temperature sensor (not shown) so that the temperature of water heated and discharged from the boiler 92 may be controlled. The water discharged from the boiler 92 may be delivered to the connecting pipe 19.

On one side surface of the base 10, there may be a power port 94 for connecting an external power source and a power switch 96 for enabling use of power supplied through the power port 94. The power port 94 and the power switch 96 may be placed on one side of the rear of the base 10.

For the connection of the connecting pipe 19, the base 10 has a pipe connection hole 124. The connecting pipe 19 may be connected to the pipe connection hole 124 so that water delivered from the water supply part 82 is delivered to the extraction part 30. A power line connection hole 122 is located adjacently to the pipe connection hole 124. The power line 18 may be connected to the power line connection hole 122.

Hereinafter, the operation of a beverage extraction of the beverage apparatus having the above-mentioned configuration according to an embodiment of the present disclosure will be described in detail.

In the present disclosure, the extraction part 30 may be moved by the support legs 20 installed on the base 10. As illustrated in FIG. 3, the extraction part 30 may be raised or lowered relative to the base 10. FIG. 3(a) illustrates a state in which the extraction part 30 is relatively close to the base 10, and FIG. 3(b) illustrates a state in which the extraction part 30 is relatively far from the base 10.

The position of the extraction part 30 may be adjusted basically by changing the lengths of the leg drive units 28. In the illustrated embodiment, the positioning adjustment of the extraction part 30 is performed as the connection angle between the support leg 22 and the connecting leg 24 varies depending on the length of the leg drive unit 28.

When the length of the leg drive unit 28 is increased as illustrated in FIG. 7, the support link 22 and the connecting link 24 form an almost right angle, and the position of the connection frame 26 connected to the connecting link 24 is raised.

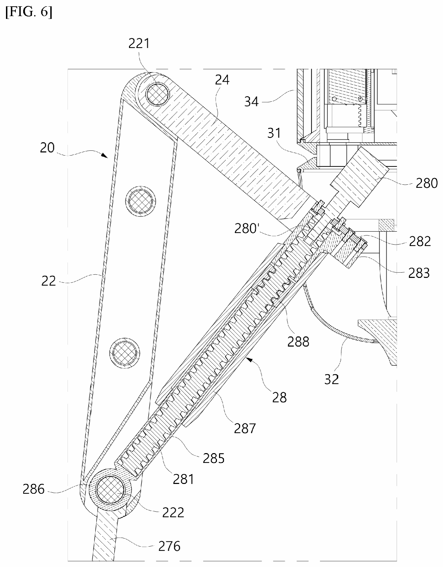

Conversely, when the length of the leg drive unit 28 is relatively shortened as illustrated in FIG. 6 compared to FIG. 7, the support link 22 and the connecting link 24 form an acute angle, and the position of the connection frame 26 connected to the connecting link 24 is lowered.

The overall height of the extraction part 30 may be raised and lowered by adjusting the lengths of the leg drive units 28 equally. However, when the lengths of the leg drive units 28 are adjusted differently, the angle of the connection frame 26 with respect to the base 10 may change, causing the extraction part 30 to tilt in various directions.

For reference, in the apparatus of the present disclosure, the leg drive unit 28 may be configured to connect the joint 27 with the connection frame 26 without the support link 22 and the connecting link 24. In this state, when the length of the leg drive unit 28 is varied, the position of the connection frame 26, i.e., the height of the extraction part 30, may be adjusted. In this case, the joint 27 may rotate a predetermined angle with respect to the base 10.

Meanwhile, how a beverage in capsule 1 in the apparatus of the present disclosure is extracted will be described. In order to mount the capsule 1 for beverage extraction in the capsule sitting space 540, the capsule sitting space 540 of the capsule seat 54 is required to be exposed to the outside. For this, the cover 34 is required to rise relative to the frame 31.

In order for the cover 34 to rise, the second drive source 64 is required to be driven. The drive gears 66 is rotated by the operation of the second drive source 64, and operates in engagement with the rack gears 602. The drive gears 66 moves along the rack gears 602 to the upper part of the movement guide structure 60, and the moving component 62 also is moved along the movement guide structure 60 by the drive gears 66. The moving component 62 is connected to the moving guide 38 of the fixing plate 36 fixed to the cover 34, resulting in the rising of the cover 34. In this way, a state in which the cover 34 is raised is illustrated in FIF. 29(a).

The cover 34 is raised relative to the frame 31, exposing the capsule sitting spaces 540 of the capsule seat 54. FIF. 30(a) illustrates a state in which the capsule sitting spaces 540 are exposed.

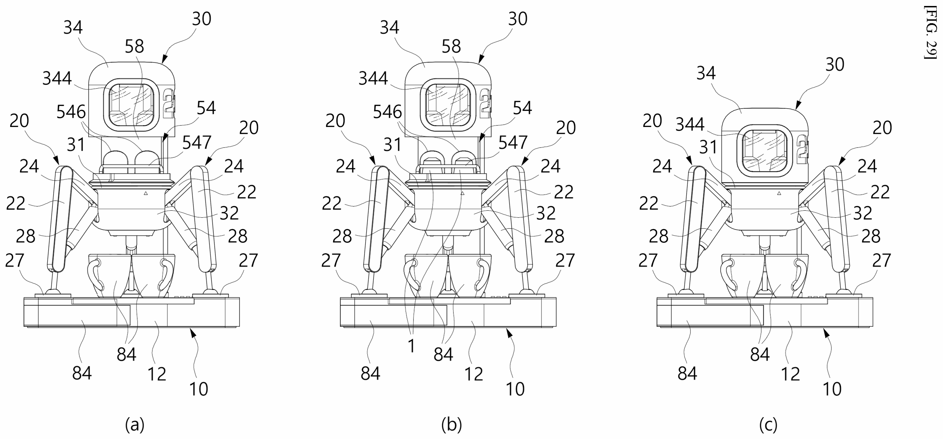

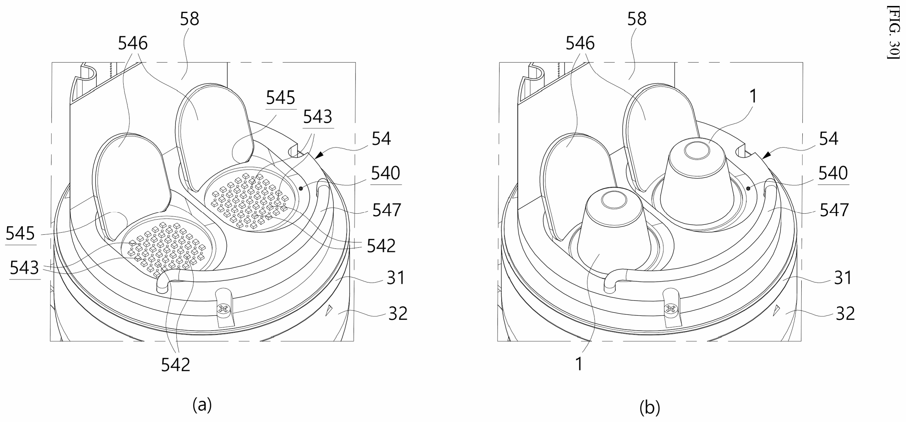

A state in which a user has seated the capsules 1 in the capsule sitting spaces 540 is illustrated in FIG. 29(b) and FIG. 30(b). It is not necessary to seat the capsule 1 in all of the capsule sitting spaces 540. However, when extracting a beverage from two capsules 1, the capsules 1 are seated in all of the capsule sitting spaces 540.

In this case, directions in which the capsules 1 are seated in the capsule sitting spaces 540 may be seen in FIG. 15 or 17. Each of the capsules 1 has a shape approximately similar to a hemisphere, and an aluminum cap thereof, which has a relatively large cross-sectional area, is seated in the capsule sitting space 540 so that the aluminum cap is directed in the direction of gravity. That is, in the capsule 1, a part with a relatively small cross-sectional area is located at an upper portion thereof in the direction of gravity, and a part with a relatively large cross-sectional area, the aluminum cap, is located at a lower portion thereof in the direction of gravity.

Next, cover 34 is moved in the opposite direction from above. When the second drive source 64 is driven in the opposite direction, the moving component 62 moves in the direction of gravity along the movement guide structure 60 by the cooperative operation of the drive gears 66 and the rack gears 602, and the cover 34 also moves toward the frame 31.

As the cover 34 moves, the fixing plate 36 also moves together therewith, and the cap 50 provided on the fixing plate 36 also descends together therewith. FIG. 29(c) illustrates a state in which the cover 34 is seated on the frame 31. In this process, the cap 50 is also lowered and presses the capsule 1. In this process, a through-hole is formed in the capsule 50 by the perforator 52. The state of FIG. 29(c) is a state in which a beverage is able to be extracted from the capsule 1.

In this state, the aluminum cap of the capsule 1 may be in close contact with the protrusions 542 on the bottom of the capsule sitting space 540, and may be torn when receiving strong pressure due to the injection of water, enabling a beverage to be discharged.

Next, water is supplied through the connecting pipe 19 from the water supply part 82. The water supply to the capsule 1 may be controlled by the controller 80. For the water supply, the main pump 90 is operated to supply water from the water tank 84 to the boiler 92. In boiler 92, a water temperature is set to a predetermined value by the control of the controller 80. For example, in the case of the capsule 1 containing coffee, the temperature inside the capsule 1 is usually between 80 and 90 degrees Celsius. The boiler 92 heats water accordingly.

Water heated to a predetermined temperature in the boiler 92 in this way may flow through the first branch pipe 191 and the second branch pipe 192 of the connecting pipe 19. The first valve 41, the first pump 43, the second valve 41', and the second pump 43' are used to perform water supply through the first branch pipe 191 and the second branch pipe 192.

In order to supply water through both the first supply pipe 45 and the second supply pipe 45' so that beverage extraction is performed simultaneously from the two capsules 1, the first pump 43 is driven to open the first valve 41, and the second pump 43' is also driven to open the second valve 41'.

In order to perform beverage extraction only in the capsule 1 on a first side, water is required to be supplied only through the first supply pipe 45, for example. In this case, the first pump 43 is driven to open the first valve 41, and the second pump 43' is not driven to close the second valve 41'.

Conversely, in order to perform beverage extraction only in the capsule 1 on a second side, water is required to be supplied only through the second supply pipe 45'. To this end, the second pump 43' is driven to open the second valve 41', and the first pump 43 is not driven to close the first valve 41. Accordingly, various methods of extracting beverages from the capsules 1 are controlled by the controller 80 according to the choice of a user.

Meanwhile, a beverage extracted from the capsule 1 may pass through each of the hoppers 56 and be discharged into a cup through the discharge pipe 57 or 57'. For this purpose, the cup is placed on the base 10 before starting the beverage extraction. When extracting beverages from two capsules 1, two cups may be positioned thereon. This is a case in which the beverages extracted from the two capsules 1 are separately received in the cups, respectively.

When beverages extracted from two capsules 1 are intended to be mixed, a cup is placed at a position to simultaneously receive the beverages coming out from the discharge pipes 57 and 57'. In this case, the diameter of the inlet of the cup is required to be larger than a distance between the outlets of the first discharge pipe 57 and the second discharge pipe 57'. Of course, beverages coming out from the first discharge pipe 57 and the second discharge pipe 57 may be received in separate cups and mixed.

When beverage extraction is completed, the cover 34 is opened. That is, proceeding in the reverse order of the order shown in FIG. 29, the cover 34 is opened, and the capsule 1 is removed from the capsule seat 54.

In addition, after a beverage is extracted, some of the beverage may remain in the discharge pipe 57 or 57'. Here, the remaining beverage may be called "residual water". In the apparatus of the present disclosure, when residual water falls from the discharge pipe 57 or 57', the residual water may go directly to the surface of the base 10 and contaminate the display 16 on the base 10.

However, the residual water tray assembly 70 may prevent residual water from falling on the base 10.

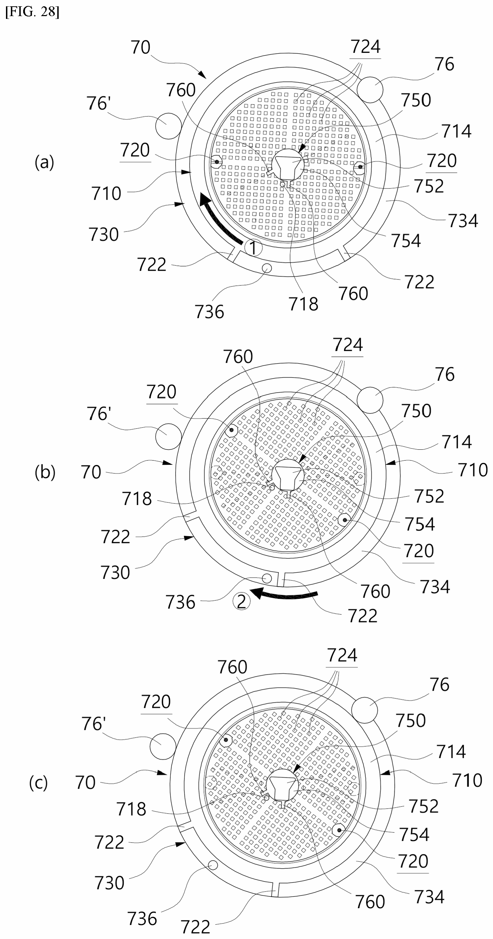

Referring to FIG. 28, how residual water is collected into the residual water pools 738 of the second tray 730 and is discharged by the operation of the residual water tray assembly 70 will be described. In the process in which a beverage is extracted and delivered to a cup, the extraction through-holes 720 formed in the first tray 710 of the residual water tray assembly 70 are located at positions corresponding to the first discharge pipe 57 and the second discharge pipe 57'. This is possible because the direction in which the residual water tray assembly 70 is mounted in the opening part 32' of the housing 32 is determined. Of course, the positions of the extraction through-holes 720 may vary depending on positions at which the first tray 710 and the second tray 730 are rotated relative to the rotation center shaft 750. However, when mounting the residual water tray assembly 70 in the opening part 32' of the housing 32, the positions of the first tray 710 and the second tray 730 may be set as shown in FIG. 28(a).

As shown in FIG. 28(a), when the positions of the first stop protrusions 760 of the rotation center shaft 750 and the first holding protrusion 718 of the first tray 710 are set, and the positions of the second stop protrusions 722 of the first tray 710 and the second holding protrusion 736 of the second tray 730 are set, the mounting part 752 is mounted in the mounting groove 324 so that the first discharge pipe 57 and the second discharge pipe 57' are positioned to communicate with the extraction through-holes 720, respectively.

Accordingly, setting the relative positions of the first tray 710 and the second tray 730 may be performed manually by a user, but may also be performed even by driving the first tray drive source 72 and the second tray drive source 72'. That is, by rotating the first tray 710 and the second tray 730, as shown in FIG. 28(a), the positions of the first stop protrusions 760 of the rotation center shaft 750 and the first holding protrusion 718 of the first tray 710 are set, and the positions of the second stop protrusions 722 of the first tray 710 and the second holding protrusion 736 of the second tray 730 are set.

Next, after beverage extraction from the extraction part 30 is completed, the first tray 710 is rotated by a predetermined angle so that the extraction through-holes 720 do not communicate with the first discharge pipe 57 and the second discharge pipe 57'. This state is illustrated in FIG. 28(b). In this case, portions at which the residual water holes 724 are located faces the ends of the first discharge pipe 57 and the second discharge pipe 57', and thus even if residual water remaining in the first discharge pipe 57 or the second discharge pipe 57' is discharged, the residual water may not pass through the first tray 710. The residual water that falls into the area in which the residual water holes 724 are located is held by the residual water holes 724.

Meanwhile, when cups located at the bottoms of the first discharge pipe 57 and the second discharge pipe 57 are removed by a user, this is detected, and the second tray 730 is rotated. That is, the second tray drive source 72 rotates the second tray 730 so that the residual water pools 738 are respectively positioned at positions corresponding to the ends (indicated by dotted lines in FIG. 28(c)) of the first discharge pipe 57 and the second discharge pipe 57'. In this way, any residual water passing through the first tray 710 falls into the residual water pools 738 and does not fall on the base 10.

In this way, after the beverage extraction is completed, the residual water tray assembly 70 may be separated from the opening part 32' of the housing 32 to remove residual water in the residual water pools 738 and residual water in the residual water holes 724. In addition, the residual water tray assembly 70 is re-installed in the opening part 32' of the housing 32 to prepare for the next beverage extraction operation.

Hereinafter, more detailed descriptions of the operation of the beverage apparatus having the above-mentioned configuration according to the embodiment of the present disclosure will be described with reference to the drawings.

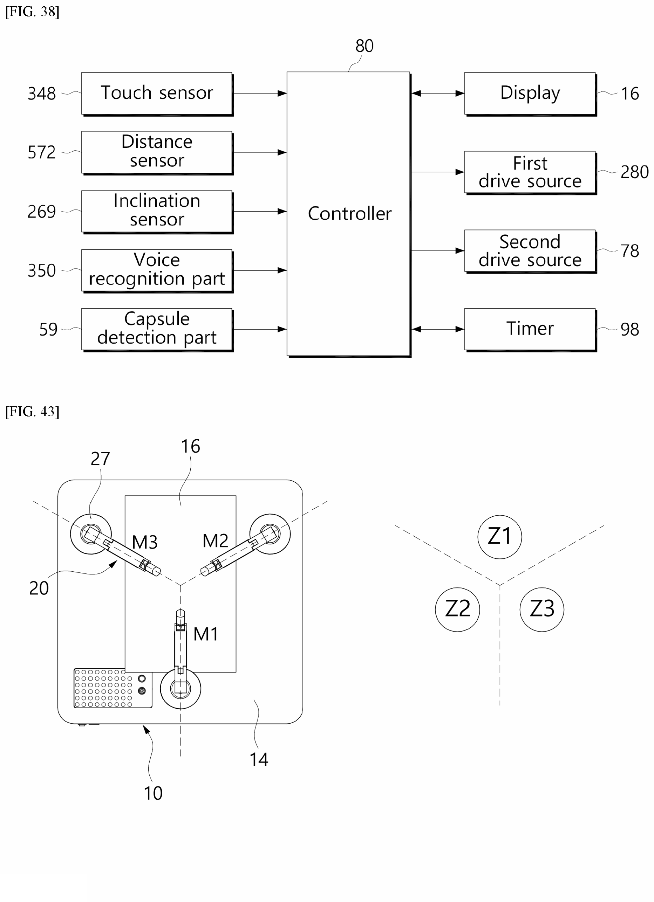

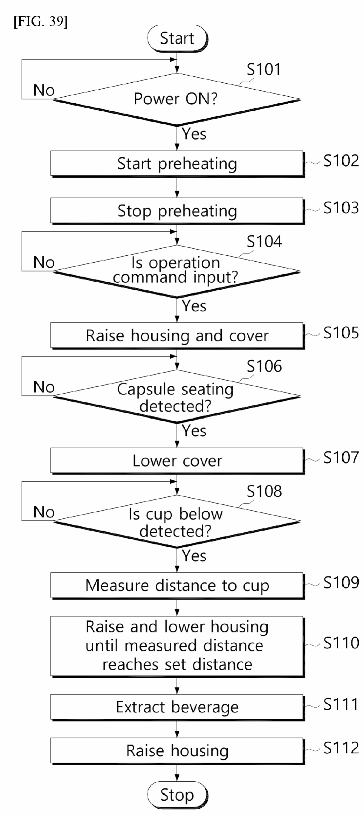

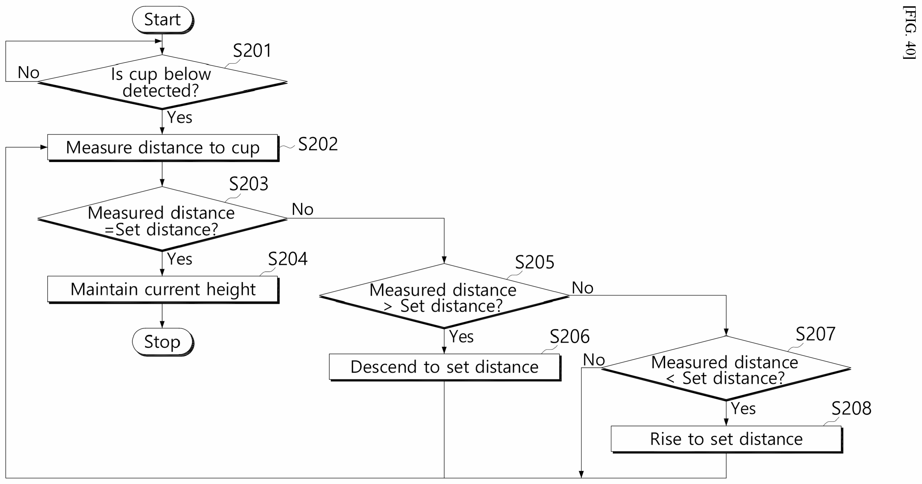

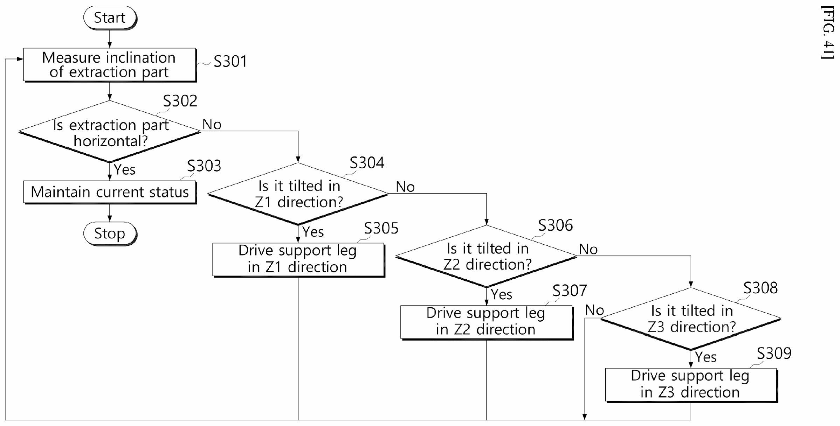

FIG. 38 is a block diagram schematically showing connection between the controller constituting the beverage apparatus components connected to the controller in the embodiment of the present disclosure, FIG. 39 is a flowchart showing the operation of the beverage apparatus in the embodiment of the present disclosure, FIG. 40 is a flowchart showing the process of adjusting the height of the extraction part in the beverage apparatus in the embodiment of the present disclosure, and FIG. 41 is a flowchart showing the process of leveling the extraction part in the beverage apparatus in the embodiment of the present disclosure.

In the present disclosure, the extraction part 30 may be installed above the base top plate 14 constituting the upper surface of the base 10. The base top plate 14 may be provided with the display 16. In the display 16, settings and commands for the operation of the beverage apparatus may be input through the touch manipulation of a user. In addition, the display 16 may display screens for the operating steps of the beverage apparatus.

The beverage apparatus of the present disclosure may include the extraction part 30 for extracting a beverage by injecting water into the capsule 1, and the plurality of support legs 20 for moving the extraction part 30 up and down while supporting the extraction part 30.

The extraction part 30 may have the housing 32 positioned at the lower portion of the frame 31 and the cover 34 positioned on the upper portion thereof. The capsule 1 may be seated on the upper surface of the housing 32. The upper surface of the housing 332 may be opened and closed by moving the cover 34 up and down. The capsule sitting space 540 may be formed on the upper surface of the housing 32, so that the capsule 1 may be seated in the capsule sitting space 540.

The capsule detection part 59 may detect that the capsule 1 is seated in the capsule sitting space 540. The capsule detection part 59 may be, for example, an ultrasonic sensor, a laser sensor, a camera, a scanner, etc. In this embodiment, when a camera is used, an image described in the capsule 1 may be captured, and pieces of information related to the capsule may be obtained through the analysis of the image. For example, information such as the brand of the capsule, the type of the capsule (tea, coffee, etc.), and the flavor of the capsule may checked in advance. In addition, information related to the capsule may also be displayed through the screen of the display 16. For example, depending on the type or taste of the capsule, different colored animations may be displayed on the display 16 above. In addition, when a plurality of capsules is seated, the display 16 may display a different color for each of the capsules.

The support legs 20 may move the housing 32 up and down while supporting the housing 32. The first drive source 280 may drive the support legs 20 to raise and lower the housing 32. In addition, the moving component 62 may move the cover 34 up and down. The second drive source 64 may drive the moving component 62 to raise and lower the cover 34.

The beverage apparatus may include the controller 80. The above controller 80 may control the first drive source 280 and the second drive source 64 respectively to drive the support legs 20 and the moving component 62.

The touch sensor 348 installed on one surface of the cover 34 may detect the touch manipulation of a user. The touch sensor 348 may be installed on the upper surface of the cover 34, i.e., on the cover top plate 342. Of course, the touch sensor 348 may be installed on the front surface or side surface of the cover 34. When the touch of a user is detected by the touch sensor 348, the controller 80 may recognize the touch as an operation command for the beverage apparatus and initiate an operation for extracting a beverage.

A voice recognition part 350 that recognizes the voice of a user may be provided inside the extraction part 30. When a voice corresponding to the operation command from a user is recognized by the voice recognition part 350, the controller 80 may initiate an operation for extracting a beverage from the beverage apparatus.

The inclination sensor 269 installed inside the extraction part 30 may measure the inclination of the extraction part 30. The inclination sensor 269 may preferably be installed inside the housing 32 and measure the inclination of the housing 32.

The controller 80 may determine whether the extraction part 30 is horizontal on the basis of the inclination measured by the inclination sensor 269, and, when the extraction part 30 is not horizontal, control the first drive source 280 to drive the support legs 20 so that the extraction part 30 is horizontal.

The distance sensor 572 installed on the lower surface of the extraction part 30 may measure a distance to a container, such as a cup, located below the extraction part 30. The distance sensor 572 may preferably be installed on the lower surface of the housing 32.

The controller 80 may control the second drive source 64 on the basis of the distance measured by the distance sensor 572 to the cup to drive the moving component 62, thereby controlling the height of the extraction part 30. In this case, the height of the extraction part 30 may be adjusted so that the distance from the extraction part 30 to the cup is a set distance.

For example, when the measured distance from the extraction part 30 to the cup is greater than the set distance, the extraction part 30 may be lowered until the measured distance reaches the set distance, and conversely, when the measured distance is less than the set distance, the extraction part 30 may be raised until the measured distance reaches the set distance. The extraction part 30 stops moving up and down when the measured distance reaches the set distance.

Referring to FIG. 39, when the beverage apparatus is powered on in S101, a preheating operation may be performed in S102. While the preheating operation is in progress, a screen indicating that preheating is in progress may be displayed on the display 16. In addition, when the preheating operation is completed in S103, a screen indicating that preheating is completed may be displayed on the display 16.

When the touch sensor 348 is touched or the operation command for the beverage apparatus is input through voice recognition in the voice recognition part 350 while the preheating operation is completed, a beverage extraction process may start in the beverage apparatus.

When the operation command is input in S104, the support legs 20 and the moving component 62 are driven to raise the housing 32 and the cover 34 in S105. In this case, the housing 32 may preferably be raised to a set maximum height.

When the capsule 1 is seated on the upper surface of the housing 32 while the cover 34 is raised, the capsule detection part 59 may detect the seating of the capsule 1. When the seating of the capsule 1 is detected by the capsule detection part 59 in S106, the cover 34 may be lowered in S107.

In this case, when the capsule 1 is detected by the capsule detection part 59, the cover 34 may be lowered immediately, but the cover 34 may preferably be lowered after a set time has elapsed. The set time may be counted by a timer 98. In this embodiment, one to three seconds is desirable. This prevents the cover 34 from immediately descending and colliding with the hand of a user after the user seats the capsule 1. When a certain amount of resistance occurs during the descent of the cover 34, the descent of the cover 34 may be stopped.

When a cup is placed on the base 10 corresponding to the lower portion of the extraction part 30 while the cover 34 is lowered, the distance sensor 572 installed on the lower portion of the extraction part 30 may detect the cup placed below. When the cup is detected by the distance sensor 572 in S108, the distance to the cup is measured in S109. In addition, the housing 32 may be raised or lowered until the measured distance to the cup reaches the set distance in S110. In this embodiment, the set distance may be 1 to 3 cm. By bringing the extraction part 30 close to the cup and then extracting a beverage, the beverage may be prevented from splashing out of the cup during the beverage extraction process.

When the housing 32 reaches the set distance, water may be supplied to the capsule 1 so that the beverage may be extracted into the cup in S111. When the extraction of the beverage is completed, the housing 32 may rise in S112. This allows a user to avoid collision with the housing 32 when removing the cup.

In S111, in another embodiment, the capsule 1 from which a beverage is extracted may be selected by a user through the display 16, and water may be supplied to the selected capsule 1 to extract the corresponding beverage. The plurality of capsule sitting spaces 540 may be installed on the upper surface of the housing 32, and a user may seat one or more of the capsule 1. When the capsule 1 is seated, a user may extract a beverage by selecting the capsule 1 corresponding to the beverage to be extracted. In addition, in another embodiment, when the capsule 1 from which a beverage is extracted is selected, the extraction of the beverage may proceed according to an extraction recipe corresponding to the capsule 1.

Referring to FIG. 40, as described above, when the distance sensor 572 detects a cup under the housing 32 in S201 while the capsule is detected and the cover 34 is lowered, the distance sensor 572 measures the distance to the cup in real time in S202.

When the measured distance to the cup is the set distance in S203, the housing 32 is maintained at current height in S204. However, when the measured distance is not the set distance, the housing 32 is raised and lowered until the measured distance is the set distance.

That is, when the measured distance is greater than the set distance in S205, the housing 32 is lowered until the measured distance is the set distance in S206. Conversely, when the measured distance is smaller than the set distance in S207, the housing 32 is raised until the measured distance is the set distance in S208.

When the measured distance is the set distance in S206 and S208, the process proceeds to S202 again and the subsequent process may be repeated.

The extraction part 30 of the beverage apparatus may be operated to be horizontal.

Referring to FIG. 41, the inclination sensor 269 installed inside the extraction part 30 measures the inclination of the extraction part 30 in S301). The controller 80 determines whether the extraction part 30 is horizontal on the basis of the measured inclination in S302. The inclination measured by the inclination sensor 269 includes the direction and angle of the inclination.

As a result of the determination, when the extraction part 30 is horizontal, the extraction part 30 is maintained in a current horizontal state in S303, and when the extraction part 30 is not horizontal, at least one of the plurality of support legs 20 may be driven to make the extraction part 30 horizontal. In this case, a support leg corresponding to the inclined direction among the plurality of support legs 20 may be driven so that the extraction part 30 is horizontal

In this embodiment, the beverage apparatus is described as having the three support legs 30. From the center point of the three support legs 20, the directions of the three support legs 20 are respectively called Z1, Z2, and Z3.

When the extraction part 30 is not horizontal, it is determined whether the extraction part 30 is inclined in the Z1 direction, and when the extraction part 30 is inclined in the Z1 direction in S304, the support leg in the Z1 direction among the three support legs 20 is driven to make the extraction part 30 horizontal in S305. In this case, in another embodiment, in order to quickly make the extraction part 30 horizontal, while the support leg in the Z1 direction among the three support legs 20 is driven, the remaining support legs in the Z2 direction and the Z3 direction may also be driven so that the extraction part 30 is horizontal quickly.

When the extraction part 30 is not inclined in the Z1 direction, it is determined whether the extraction part 30 is inclined in the Z2 direction, and when the extraction part 30 is inclined in the Z2 direction in S306, the support leg in the Z2 direction among the three support legs 20 is driven so that the extraction part 30 is horizontal in S307. In this case, in another embodiment, in order to quickly make the extraction part 30 horizontal, while the support leg in the Z2 direction among the three support legs 20 is driven, the remaining support legs in the Z1 direction and Z3 direction may also be driven so that the extraction part 30 is horizontal quickly.

When the extraction part 30 is not inclined in the Z2 direction, it is determined whether the extraction part 30 is inclined in the Z3 direction, and when the extraction part 30 is inclined in the Z3 direction in S308, the support leg in the Z3 direction among the three support legs 20 is driven so that the extraction part 30 is horizontal in S309. In this case, in another embodiment, in order to quickly make the extraction part 30 horizontal, while the support leg in the Z3 direction among the three support legs 20 is driven, the remaining support legs in the Z1 direction and Z2 direction may also be driven so that the extraction part 30 is horizontal quickly.

Meanwhile, the beverage apparatus may adjust the inclination of the extraction part 30 in real time by independently driving the plurality of support legs 20. For example, each of the three support legs 30 may be driven to allow the extraction part 30 to be inclined at an arbitrary angle. In addition, when the variable lengths of the leg drive units 28 that constitute the three support legs 20 are adjusted, the inclination angle of the extraction part 30 may be adjusted. When the inclination of the extraction part 30 is adjusted, a direction in which the lower surface of the extraction part 30 faces is adjusted.

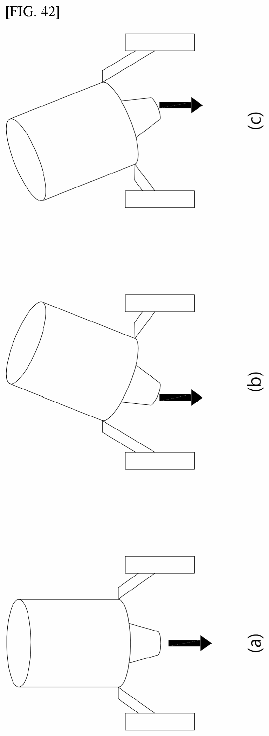

FIG. 42 is a schematic view showing the discharge position of a beverage according to the inclination of the extraction part in the beverage apparatus of an embodiment of the present disclosure. FIG. 42(a) illustrates a state in which the extraction part 30 is horizontal and the lower surface of the extraction part 30 faces directly downward. FIG. 42(b) illustrates a state in which the extraction part 30 is tilted to the right side and the lower surface of the extraction part 30 is directed to the left side. FIG. 42(c) illustrates a state in which the extraction part 30 is tilted to the left side and the lower surface of the extraction part 30 is directed to the right side.

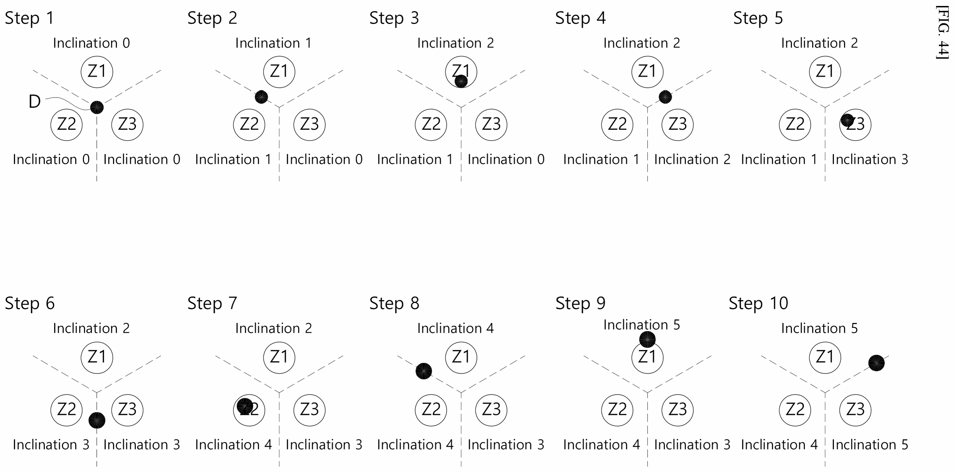

FIG. 43 is a view schematically illustrating the inclination direction of the extraction part 30 according to the arrangement and operation of the three support legs 20, as an example, and FIG. 44 is a view illustrating step-by-step a direction in which the extraction part 30 tilts, that is, a direction in which the lower surface of the extraction part 30 faces, by the driving of the three support legs 20.

Referring to FIG. 43, the three support legs 20 are driven by the first drive sources 280, respectively, and the extraction part 30 may be inclined in the Z1, Z2, or Z3 direction or a combined direction thereof by driving each of the support legs 20. In the drawing, among the three support legs 20, a first support leg is called M1, a second support leg is called M2, and a third support leg is called M3, and directions in which the three support legs are inclined by being driven are called Z1, Z2, and Z3, respectively.

In a state in which the extraction part 30 is horizontal, when the first support leg M1 is driven, the extraction part 30 tilts in the Z1 direction, and when the second support leg M2 is driven, the extraction part 30 tilts in the Z2 direction. When the third support leg M3 is driven, the extraction part 30 tilts in the Z3 direction. In this way, the tilting direction of the extraction part 30 may change depending on which of the first, second, and third support legs is driven. In addition, the angle of the tilting may vary depending on lengths by which the first, second, and third support legs are driven.

Referring to FIG. 44, for example, when three support legs 20 are driven step by step from step 1 to step 10, the inclination direction and inclination degree of the extraction part 30 are illustrated.

In step 1, the inclinations in the Z1, Z2, and Z3 directions are all 0, so the extraction part 30 is horizontal. In this case, a direction D in which the lower surface of the extraction part 30 faces may be a center.

In step 2, there is no tilting due to an inclination of 0 maintained in the Z3 direction, but there are tiltings by 1 in the Z1 and Z2 directions. Accordingly, in step 2, D tilts in both the Z1 and Z2 directions simultaneously, so D appears to tilt in an intermediate direction between the Z1 and Z2 directions.

In step 3, the tilting in the Z1 direction is 2, so more tilting in the Z1 direction is performed. In this case, D may appear in the Z1 direction.

In this way, the inclinations in the Z1, Z2, and Z3 directions change at each step from step 4 to step 10, at each step, and thus the inclination direction and inclination degree of the extraction part 30 are changed.

Numbers indicating the degrees of inclinations are relative values to each other and indicate the relative sizes of the inclinations.

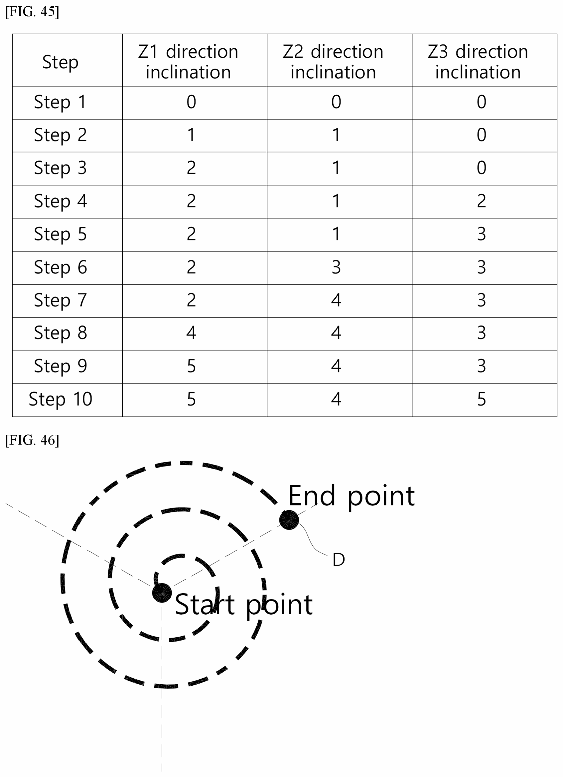

The inclination directions and inclination degrees from steps 1 to 10 illustrated in FIG. 44 may be expressed as in FIG. 45.

FIG. 46 illustrates the trajectory of a direction in which the lower surface of the extraction part 30 faces during steps 1 to 10. By adjusting the directions and angles of the inclination as each step progresses, the trajectory may be a spiral. Of course, an arbitrary trajectory may be drawn by adjusting the directions and angles of the inclination differently, or a set pattern may be drawn.

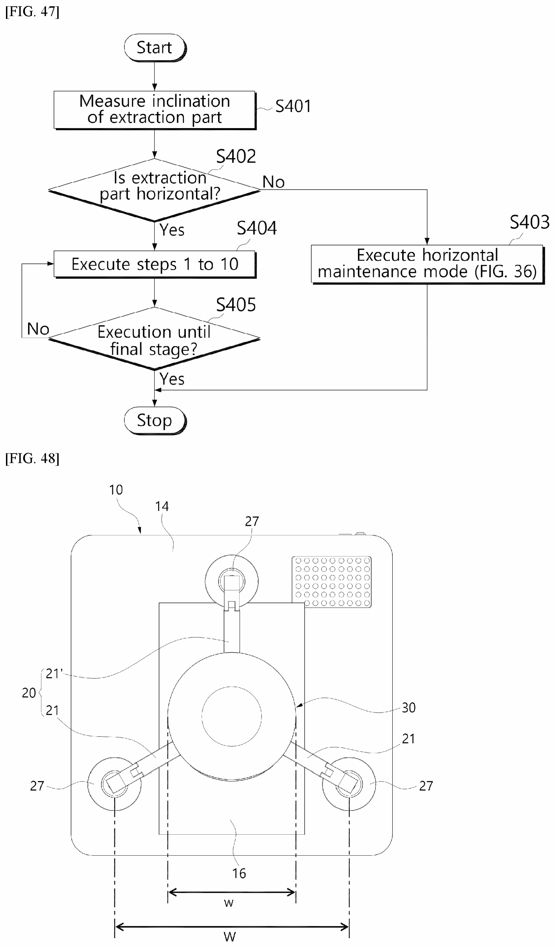

FIG. 47 illustrates an example in which the direction D in which the lower surface of the extraction part 30 faces is spiral, as in FIG. 46. The inclination sensor 269 measures the inclination of the extraction part 30 in S401, and the controller 80 determines whether the extraction part 30 is horizontal on the basis of the measured inclination in S402. When the extraction part 30 is not horizontal, the operations described in FIG. 41 are performed to make the extraction part 30 horizontal in S403. When the extraction part 30 is horizontal, the direction D in which the lower surface of the extraction part 30 faces is directly downward.

With the extraction part 30 in a horizontal state, the support legs 20 are sequentially driven for each step so that the direction and angle of the inclination at each step as shown in FIG. 46 are achieved in S404. When the execution reaches a final stage in S405, it stops.

Meanwhile, in the present disclosure, the extraction part 30 may be supported above the base 10 by the support legs 20, which will be described in more detail. The extraction part 30 may be disposed above the base 10 by being spaced apart from the base 10. In this case, unlike in the above example, a configuration for supplying water into the base 10 may not be located inside the base 10. That is, the supply of water for beverage extraction from the capsule 1 may be performed outside the base 10. Alternatively, the configuration for supplying water for beverage extraction may be present within the extraction part 30. Alternatively, the configuration for supplying water for beverage extraction may be present outside the base 10 and the extraction part 30.

Since the extraction part 30 is spaced apart upward from the base 10, a space in which a cup is positioned may be formed between the base 10 and the extraction part 30. When the extraction part 30 moves with respect to the base 10, a beverage extracted from the extraction part 30 may be received by using cups having various heights. In other words, cups with different heights may be used.

Here, the first side of the support leg 20 may be connected to the extraction part 30 and the second side thereof may be connected to the base 10 so that the support leg 20 supports the extraction part 30. One or more support legs 20 may be used. That is, the extraction part 30 may be supported above the base 10 by using one support leg 20.

Alternatively, the extraction part 30 may be supported above the base 10 by using one or more support legs 20. The support leg 20 may be used in multiples as can be seen in FIG. 48, and as shown, three support legs may be arranged at 120 degree intervals.

In this case, the two support legs 20 may be connected to the opposite ends of the front edge of the base 10. In this way, the support legs 20 may be respectively located on the opposite ends of the front edge of the base 10. The support legs 20 may be called front legs 21. Through a space between these front legs 21 cup may enter a space between the base 10 and the extraction part 30.

In the illustrated embodiment, the remaining one support leg 20, i.e., the one adjacent to the rear edge of the base 10, may be referred to as a rear leg 21'. Water may be transferred from the base 10 to the extraction part 30 through the support leg 20. This may be performed via the rear leg 21'. Alternatively, the rear leg 21' may include two rear legs 21'. In this case, the support legs 20 may be arranged to have a quadrangular shape by connecting portions at which the front legs 21 and the rear legs 21' are connected to the base 10.

The pair of front legs 21 are arranged to be spaced apart from each other on opposite sides relative to the portion of the extraction part 30 to which a beverage is discharged. A width between the front legs 21 is referred to as W. The front legs 21 are respectively connected to positions adjacent to the opposite ends of the front edge of the base 10 relative to the base 10.

The first side of each of the pair of front legs 21 may be connected to the upper surface of the base 10, and the second side thereof may be connected to the edge of the extraction part 30. Here, a part at which the first side of the front leg 21 is connected to the base 10 is outside an area corresponding to the width W of the extraction part 30. A first side of the rear leg 21' may be connected to the upper surface of the base 10, and a second side thereof may be connected to an edge of the extraction part 30 like the front leg 2. A part at which the rear leg 21' is connected to the base 10 is also outside the area corresponding to the width W of the extraction part 30.

In the above, even though all the components constituting the embodiments according to the present disclosure have been described as being combined or operating in combination as one, the present disclosure is not necessarily limited to these embodiments. That is, within the scope of the objective of the present disclosure, one or more of all of the components may be selectively combined to operate. In addition, the terms "include", "comprise", or "have", as used herein, unless otherwise specifically stated, imply that the relevant component may be present, and therefore should be construed to include other components rather than to exclude other components. All terms, including technical or scientific terms, unless otherwise defined, have the same meanings as commonly understood by those skilled in the art to which the present disclosure belongs. Commonly used terms, such as terms defined in a dictionary, should be interpreted as being consistent with their contextual meaning in the relevant technology and should not be interpreted in an idealized or overly formal sense unless expressly defined in the present disclosure.

In the illustrated embodiment, two capsules 1 are mounted, but a larger number of capsules 1 may be mounted. To this end, the capsule seat 54 is additionally provided with the capsule sitting spaces 540, and components for supplying water to each of the capsule sitting spaces 450 and components for discharging extracted beverages are additionally required in correspondence to the number of the capsule sitting spaces 450.

In the illustrated embodiment, the multiple support legs 20, that is, the connecting links 24 and the leg drive units 28 are connected to the connection frame 26, but are not limited thereto. The connecting links 24 and the leg drive units 28 may be connected rotatably relatively to the frame 31 or the housing 32 without the connection frame 26. To this end, a component such as the leg connection part 263 may be provided in the frame 31 or the housing 32.

In addition, in the illustrated embodiment, the support leg 20 which supports the extraction part 30 above the base 10 may include the support link 22, the connecting link 24, and the leg drive unit 28, but is not limited thereto. The support leg 20 may be configured as the leg drive unit 28. In this case, the leg drive unit 28 may be connected to the frame 31 or the housing 32 of the extraction part 30 and may be connected rotatably relatively to the base at the same time. For example, one side of the leg drive unit 28 may be connected rotatably relatively to the joint 27 installed on the base 10.

## Claims

1. A beverage apparatus using a capsule (1), the beverage apparatus comprising:
a base (10) having a water supply part (82) provided therein; and
an extraction part (30) arranged above the base (10) by being spaced apart therefrom so that a space in which a cup is positioned is formed between the extraction part (30) and the base (10), wherein the extraction part (30) has a space, in which a capsule (1) is mounted, formed therein and is configured to extract a beverage from the capsule (1) by using water supplied from the water supply part (82);
wherein
the extraction part (30) is configured to be movable up and down with respect to the base (10), the beverage apparatus being **characterized in that** lengths of support legs (20) which support the extraction part (30) above the base (10) are variable.

2. The beverage apparatus of claim 1, wherein the base (10) is configured to supply water through the support legs (20) to the extraction part (30).

3. The beverage apparatus of claim 1, wherein the water supply part (82) comprises a water tank (84) installed inside the base (10).

4. The beverage apparatus of claim 1, wherein each of the support legs (20) comprises a leg drive unit (28) of variable length, wherein the leg drive unit (28) has a first side connected rotatably relatively to the extraction part (30) and has a second side installed rotatably relatively on the base (10).

5. The beverage apparatus of claim 1, wherein the base (10) has a plate-shaped appearance and is provided with a display (16) for displaying operating status thereof on an upper surface thereof.

6. The beverage apparatus of claim 5, wherein a partition wall (120) is provided inside the base (10), wherein a controller (80) and a water tank (84) are located on a first side and a second side, respectively, partitioned by the partition wall (120).

7. The beverage apparatus of claim 6, wherein the water tank (84) is formed in a plate shape to be introduced and removed through a side surface of the base (10), and comprises a water tank body (840) having a storage space (840') formed therein and a cover plate (841) constituting an upper surface of the water tank body (840) and being detachable therefrom.

8. The beverage apparatus of claim 1, wherein multiple capsule sitting spaces (540) are formed in a capsule seat provided inside the extraction part (30) so that beverages are extracted from multiple capsules simultaneously or sequentially.

9. The beverage apparatus of claim 8, wherein the extraction part (30) comprises a frame (31), a housing (32) mounted to the frame (31) and constituting an exterior thereof, and a cover (34) which is seated on the frame (31) and opens and closes the capsule sitting spaces (540).

10. The beverage apparatus of claim 1, further comprising: a residual water tray assembly (70) installed detachably on an opening part (32'), which is open toward the base (10), in the extraction part (30) to receive residual water.

11. The beverage apparatus of claim 10, wherein the residual water tray assembly (70) is magnetically attached to the extraction part (30).

12. The beverage apparatus of claim 10, wherein the residual water tray assembly (70) comprises a first tray (710) in which residual water or moisture generated from the extraction part (30) is located, a second tray (730) on which the first tray (710) is rotatably relatively seated and which is rotatably installed in the opening part (32'), with the second tray (730) having residual water pools (738), and a rotation center shaft (750) which is a rotation center of the first tray (710) and the second tray (730).

## Patentansprüche

1. Getränkezubereitungsgerät zur Verwendung mit einer Kapsel (1), wobei das Getränkezubereitungsgerät Folgendes umfasst:
eine Basis (10), die ein darin bereitgestelltes Wasserzuführteil (82) enthält; und
ein Extraktionsteil (30), das oberhalb der Basis (10) angeordnet ist, wobei es davon derart beabstandet ist, dass zwischen dem Extraktionsteil (30) und der Basis (10) ein Raum, in dem eine Tasse positioniert wird, gebildet wird, wobei das Extraktionsteil (30) einen darin ausgebildeten Raum, in dem eine Kapsel (1) angebracht ist, aufweist und konfiguriert ist, unter Verwendung von Wasser, das von dem Wasserzuführteil (82) zugeführt wird, eine Getränk aus der Kapsel (1) zu extrahieren;
wobei das Extraktionsteil (30) konfiguriert ist, bezüglich der Basis (10) auf und ab bewegt werden zu können,
wobei das Getränkezubereitungsgerät **dadurch gekennzeichnet ist, dass** die Längen der Tragbeine (20), die das Extraktionsteil (30) über der Basis (10) tragen, variabel sind.

2. Getränkezubereitungsgerät nach Anspruch 1, wobei die Basis (10) konfiguriert ist, dem Extraktionsteil (30) durch die Tragbeine (20) Wasser zuzuführen.

3. Getränkezubereitungsgerät nach Anspruch 1, wobei das Wasserzuführteil (82) einen Wassertank (84) umfasst, der in der Basis (10) installiert ist.

4. Getränkezubereitungsgerät nach Anspruch 1, wobei jedes der Tragbeine (20) eine Beinantriebseinheit (28) mit variabler Länge umfasst, wobei die Beinantriebseinheit (28) eine erste Seite aufweist, die in Bezug auf das Extraktionsteil (30) drehbar verbunden ist, und eine zweite Seite aufweist, die in Bezug auf die Basis (10) drehbar installiert ist.

5. Getränkezubereitungsgerät nach Anspruch 1, wobei die Basis (10) ein plattenförmiges Erscheinungsbild aufweist und auf ihrer oberen Oberfläche mit einer Anzeigevorrichtung (16) zum Anzeigen ihres Betriebszustandes versehen ist.

6. Getränkezubereitungsgerät nach Anspruch 5, wobei in der Basis (10) eine Trennwand (120) bereitgestellt ist, wobei sich auf einer ersten Seite bzw. einer zweiten Seite, die durch die Trennwand (120) voneinander getrennt sind, eine Steuereinheit (80) bzw. ein Wassertank (84) befinden.

7. Getränkezubereitungsgerät nach Anspruch 6, wobei der Wassertank (84) plattenförmig ausgebildet ist, sodass er durch eine seitliche Oberfläche der Basis (10) eingeführt und entfernt werden kann, und einen Wassertankkörper (840), in dem ein Aufbewahrungsraum (840') ausgebildet ist, und eine Deckplatte (841), die eine obere Oberfläche des Wassertankkörpers (840) darstellt und davon abgenommen werden kann, umfasst.

8. Getränkezubereitungsgerät nach Anspruch 1, wobei in einem Kapselsitz, der in dem Extraktionsteil (30) vorgesehen ist, mehrere Kapselsitzräume (540) ausgebildet sind, so dass Getränke aus mehreren Kapseln gleichzeitig oder nacheinander extrahiert werden.

9. Getränkezubereitungsgerät nach Anspruch 8, wobei das Extraktionsteil (30) Folgendes umfasst: einen Rahmen (31), ein Gehäuse (32), das an dem Rahmen (31) angebracht ist und eine Außenseite davon darstellt, und eine Abdeckung (34), die auf dem Rahmen (31) sitzt und die Kapselsitzräume (540) öffnet und schließt.

10. Getränkezubereitungsgerät nach Anspruch 1, das ferner Folgendes umfasst: eine Restwasser-Auffangschalenanordnung (70), die abnehmbar an einem Öffnungsteil (32'), das zu der Basis (10) hin offen ist, in dem Extraktionsteil (30) installiert ist, um Restwasser aufzunehmen.

11. Getränkezubereitungsgerät nach Anspruch 10, wobei die Restwasser-Auffangschalenanordnung (70) an dem Extraktionsteil (30) magnetisch befestigt ist.

12. Getränkezubereitungsgerät nach Anspruch 10, wobei die Restwasser-Auffangschalenanordnung (70) Folgendes umfasst: eine erste Auffangschale (710), in der sich Restwasser oder Feuchtigkeit, die von dem Extraktionsteil (30) erzeugt wird, befindet, eine zweite Auffangschale (730), auf der die erste Auffangschale (710) relativ dazu drehbar sitzt und die in dem Öffnungsteil (32') drehbar installiert ist, wobei die zweite Auffangschale (730) Restwasserauffangbehälter (738) aufweist, und eine im Drehzentrum angeordnete Welle (750), die ein Drehzentrum der ersten Auffangschale (710) und der zweiten Auffangschale (730) bildet.

## Revendications

1. Appareil à boisson utilisant une capsule (1), l'appareil à boisson comportant :
une base (10) ayant une partie d'alimentation en eau (82) prévue dans celle-ci ; et
une partie d'extraction (30) agencée au-dessus de la base (10) en étant espacée de celle-ci de sorte qu'un espace, dans lequel un gobelet est positionné, est formé entre la partie d'extraction (30) et la base (10), dans lequel la partie d'extraction (30) a un espace, dans lequel une capsule (1) est montée, formé dans celle-ci et configuré pour extraire une boisson de la capsule (1) en utilisant de l'eau fournie à partir de la partie d'alimentation en eau (82) ;
dans lequel
la partie d'extraction (30) est configurée pour être mobile vers le haut et vers le bas par rapport à la base (10),
l'appareil à boisson étant **caractérisé en ce que**
des longueurs de pieds de support (20) qui supportent la partie d'extraction (30) au-dessus de la base (10), sont variables.

2. Appareil à boisson selon la revendication 1, dans lequel la base (10) est configurée pour fournir de l'eau à la partie d'extraction (30) par l'intermédiaire des pieds de support (20).

3. Appareil à boisson selon la revendication 1, dans lequel la partie d'alimentation en eau (82) comporte un réservoir d'eau (84) installé à l'intérieur de la base (10).

4. Appareil à boisson selon la revendication 1, dans lequel chacun des pieds de support (20) comporte une unité d'entraînement de pied (28) de longueur variable, dans lequel l'unité d'entraînement de pied (28) a un premier côté en liaison rotative par rapport à la partie d'extraction (30) et a un second côté installé de manière rotative par rapport à la base (10).

5. Appareil à boisson selon la revendication 1, dans lequel la base (10) a un aspect en forme de plaque et est munie d'un affichage (16) pour afficher un état de fonctionnement de celle-ci sur une surface supérieure de celle-ci.

6. Appareil à boisson selon la revendication 5, dans lequel une paroi de séparation (120) est fournie à l'intérieur de la base (10), dans lequel une commande (80) et un réservoir d'eau (84) sont situés sur un premier côté et un second côté, respectivement, séparés par la paroi de séparation (120).

7. Appareil à boisson selon la revendication 6, dans lequel le réservoir d'eau (84) est formé en forme de plaque pour être introduit et retiré à travers une surface latérale de la base (10), et comporte un corps de réservoir d'eau (840) ayant un espace de stockage (840') formé dans celui-ci et une plaque de couvercle (841) constituant une surface supérieure du corps de réservoir d'eau (840) et pouvant être détachée de celui-ci.

8. Appareil à boisson selon la revendication 1, dans lequel de multiples espaces de logement de capsule (540) sont formés dans un logement de capsule ménagé à l'intérieur de la partie d'extraction (30) de sorte que des boissons sont extraites de multiples capsules de façon simultanée ou séquentielle.

9. Appareil à boisson selon la revendication 8, dans lequel la partie d'extraction (30) comporte un châssis (31), un boîtier (32) monté sur le châssis (31) et constituant un extérieur de celui-ci, et un couvercle (34) qui repose sur le châssis (31) et ouvre et ferme les espaces de logement de capsule (540).

10. Appareil à boisson selon la revendication 1, comportant en outre : un ensemble de cuvettes d'eau résiduelle (70) installé sur une partie d'ouverture (32') de manière détachable, qui est ouverte vers la base (10), dans la partie d'extraction (30) afin de recevoir de l'eau résiduelle.

11. Appareil à boisson selon la revendication 10, dans lequel l'ensemble de cuvettes d'eau résiduelle (70) est fixé magnétiquement à la partie d'extraction (30).

12. Appareil à boisson selon la revendication 10, dans lequel l'ensemble de cuvettes d'eau résiduelle (70) comporte une première cuvette (710) dans laquelle se trouve de l'eau résiduelle ou de l'humidité générée à partir de la partie d'extraction (30), une seconde cuvette (730) sur laquelle la première cuvette (710) est en appui de manière rotative et relative et qui est installée de manière rotative dans la partie d'ouverture (32'), la seconde cuvette (730) ayant des réserves d'eau résiduelle (738), et un axe central de rotation (750) qui est un centre de rotation de la première cuvette (710) et de la seconde cuvette (730).
